(19) Europäisches Patentamt
European Patent Office
Office européen des brevets

(11) **EP 4 120 136 A1**

(12) **EUROPEAN PATENT APPLICATION**

(43) Date of publication:
**18.01.2023 Bulletin 2023/03**

(21) Application number: **21185693.5**

(22) Date of filing: **14.07.2021**

(51) International Patent Classification (IPC):
**G06N 3/04** *(2006.01)*      **G06N 3/08** *(2006.01)*

(52) Cooperative Patent Classification (CPC):
**G06N 3/0454; G06N 3/0472; G06N 3/084;**
G06N 3/088

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Volkswagen Aktiengesellschaft
38440 Wolfsburg (DE)**
(72) Inventors:
• **Kapoor, Nikhil**
  **38440 Wolfsburg (DE)**
• **Schneider, Jan David**
  **38446 Wolfsburg (DE)**
• **Faruq, Mohi Uddin**
  **38444 Wolfsburg (DE)**
• **Jomaa, Hadi Samer**
  **31141 Hildesheim (DE)**

(54) **METHOD FOR AUTOMATICALLY EXECUTING A VEHICLE FUNCTION, METHOD FOR TRAINING A MACHINE LEARNING DEFENSE MODEL AND DEFENSE UNIT FOR A VEHICLE**

(57)    Method for automatically executing a vehicle function of a, in particular at least partially autonomously controlled, vehicle (1) based on spatially resolved raw sensor data (I) for environment perception generated by at least one sensor device (22, 24, 26) for environment detection of the vehicle (1), including:
- receiving spatially resolved raw sensor data generated by the at least one sensor device (22, 24, 26) of the vehicle (1);
- processing sensor data which are characteristic for the spatially resolved raw sensor data (I) by a defense unit (30) for adversarial defense against and/or for detection of adversarial attacks on spatially resolved raw sensor data, the defense unit (30) determining defense output sensor data, wherein for the determination of the defense output sensor data, the sensor data are mapped from a high dimensional input space representation into a low dimensional latent space representation of the sensor data and a vector quantization operation is applied to the latent space representation of the sensor data;
- executing the vehicle function based on the defense output sensor data.

Fig. 3

Processed by Luminess, 75001 PARIS (FR)

EP 4 120 136 A1

**Description**

The present invention relates to a method for, in particular automatically, executing a vehicle function of a, in particular at least partially autonomously controlled, vehicle based on spatially resolved raw sensor data for environment perception generated by at least one sensor device for environment detection of the vehicle. The present invention also relates to a method for training a machine learning defense model for adversarial defense against and/or detection of adversarial attacks on spatially resolved raw sensor data for environment perception generated by at least one sensor device for environment detection of a vehicle, and a defense unit for a vehicle.

Modern driver assistance systems, used for partial- or fully automated driving, commonly use machine learning to assess the vehicle surrounds, including objects, pedestrians and other vehicles. Using deep neural networks, different types of sensor data (camera, radar, lidar) can be processed to produce an environment model of the surroundings. As part of the perception chain, neural networks are used for the tasks of semantic segmentation or object detection. For semantic segmentation, the neural network outputs a pixel-wise labelling of the input images according to a predefined set of class labels, while networks for object detection render bounding boxes around the objects of defined target classes.

In both cases, state-of-the-art neural networks are convolutional neural networks (CNN) which parametrize a number of weights during training with respect to the input using ground truth data. Using gradient based optimization, the parameters can be tuned and the underlying function is optimized such that the loss quantified by a loss function is minimized.

In an iterative training process, the neural network learns a function representing the mapping from the input to output data. State-of-the-art models usually consist of various layers with high numbers of filters, resulting in a usually very large number of trainable parameters and thus a complex high-dimensional underlying function.

While CNNs outperform classical computer vision approaches for image processing, the neural networks come with a number of challenges.

One such challenge is the susceptibility towards so-called adversarial attacks. An adversarial attack is essentially solving of an optimization problem whereby the output is a small hand-crafted noise pattern which when added on to the input image fools the network output. These noise patterns (also called adversarial perturbations) are added on top of original images to produce adversarial images which are often imperceptible to the human eye. These adversarial images also do not have any semantically meaningful changes. Since, this noise can be created in many different ways, with or without access to a network, they pose a significant challenge to the deployment of neural networks, especially in safety-critical use cases such as automated driving.

Since the reliable perception of the environment is safety-critical for automated driving, developing defense mechanisms towards adversarial attacks is desirable to improve the safety of the automated vehicle.

Most adversarial defenses are categorized into three types:
A first approach for an adversarial defense is known as Gradient Masking. The key idea as proposed by Papernot et al. 2016 (Papernot et. al., Practical Black-Box Attacks against Machine Learning, In: arxiv: 1602.02697, 2017, https://arxiv.org/abs/1602.02697) is to hide the gradients of the network by modifying the network architecture or the training mechanism.

A second approach makes use of pre-processing methods: Several input transformations such as JPEG compression, Median blurring, Total Variational Minimization, Quilting, etc. have been propsed by Guo et al. 2017 (https://arxiv.org/abs/1711.00117) and Xu et al. 2017 (https://arxiv.org/abs/1704.01155), that aim at removing adversarial perturbations from the input. In addition, methods based on GANs such as Defense-GAN are also well-known. (Samangoui et al. 2018, https://arxiv.ora/abs/1805.06605).

A third approach Adversarial Training: The idea as proposed by Goodfellow et al. (https://arxiv.org/abs/1412.6572) here is to feed adversarial images back to the training set and retrain on the extended set of clean and adversarial images. This makes the neural network learn smoother decision boundaries leading to better generalization.

The above methods have following disadvantages:
With respect to the first approach, Gradient masking methods are all considered to fail as reported by Athalye et al. 2018 (https://arxiv.org/abs/1802.00420) since an attacker can compute attacks on a surrogate model as a black box model and use the gradients computed from this surrogate model to compute the attack which would still be successful.

With respect to the pre-processing methods suggested in the second approach: Most pre-processing methods either only give marginal improvements, or alter the clean images also significantly, deeming its practical usage limited, unless the model is retrained on the transformed images. In addition, these methods do not often generalize well to attacks of different strengths and types, as the methods themselves have carefully tuned parameters.

With respect to Adversarial training used in the third approach: Although promising, this method is known to be computationally very expensive, as in each training iteration, it requires not only the computation of the adversarial image, but also retraining the target model on this image in addition to clean images. Hence, having an adversarially robust model for a complex task such as semantic segmentation, that operates well on many attacked images at the same time often does not scale.

In US 2019/0287217 A1, a machine learning system for reduced network bandwith transmission of content is disclosed. For that, a decoder network is trained using a variational autoencoder ("VAE") generative adversarial network ("GAN"), together ("VAE-GAN"). It is described that autoencoders (VAE or GANs) can be used as compression module by mapping the content of an input image into a latent (i.e. hidden) representation space of lower dimensionality, for reduced network.

However, this patent application does not refer to Vector-Quantized Variational Autoencoder (VQ-VAE) and does not address the problem of adversarial images.

In US 2020/0184316 A1, a method and a system for generating discrete latent representations of input data items are described. The input data item are input to an encoder neural network to obtain an encoder output. For the input data, images, audio data, videos, electronic documents are mentioned as an example. The method includes generating a discrete latent representation of the input data item from the encoder output. In this document, VQ-VAE is used to generate a reconstruction of the input data item based on the discrete latent representation (for example .

This approach is compared to traditional VAE underlining the benefits of discrete representations compared to continuous representations.

From WO 2020/195826 A1, an evaluation device and an evaluation method is known which are based on a defense method, in which a standard variational autoencoder (VAE) is used as an adversarial denoising.

However, when using VAEs, one is confronted with the inherent issues of VAEs of being harder to train, so called posterior collapse, the continuous representations needing higher bitrate etc.. As mentioned, standard VAEs used for adversarial denoising often suffer from posterior collapse. That is, the VAE disregards a subset of the latent space or the VAE decoder ignores the encoder output (called the posterior probabilities) completely. This usually happens whenever the input is either too weak (out of training distribution) or too noise (e.g. adversarial), thereby limiting it's practical usability as a defense.

It is therefore the objective of the invention to provide a method for automatically executing a vehicle function of a vehicle based on spatially resolved sensor data for environment perception solution and a defense unit for a vehicle as well as a method for adversarial defense and/or detection of adversarial attacks on spatially resolved (raw) sensor data which may allow a reliable and effective adversarial defense method which in particular is real-time applicable.

The afore-mentioned problems are eliminated by the subject-matter according to the independent claims. Advantageous embodiments and further developments form the subject matter of the sub-claims.

A method for, in particular automatically, executing a vehicle function of a, in particular at least partially autonomously controlled, vehicle based on spatially resolved raw sensor data for environment perception generated by at least one sensor device for environment detection of the vehicle, includes receiving spatially resolved raw sensor data, in particular generated (in particular recorded) by the at least one sensor device of the vehicle.

The method includes processing sensor data which are characteristic for the spatially resolved raw sensor data by a (in particular processor based) defense unit for adversarial defense against and/or for detection of adversarial attacks on spatially resolved raw sensor data, the defense unit determining defense output sensor data.

For the determination of the defense output sensor data, the sensor data are mapped from a, in particular high dimensional, input space representation into a, in particular low dimensional, latent space representation of the sensor data and a (computer-implemented) vector quantization operation is applied to the latent space representation of the sensor data. In particular, "low dimensional latent space representation" and "high dimensional input space representation" are in particular to be understood such that the latent space has a lower dimension compared to the input space.

Preferably, the method includes outputting the defense output sensor data and/or providing the defense output sensor data for output and/or transmission to a target perception unit for performing a perception task based on the defense output sensor data and/or a control unit (of the vehicle) for executing the vehicle function (and/or for initiating to execute the vehicle function).

Preferably, the method further includes executing the vehicle function (in particular by the control unit of the vehicle) based on the defense output sensor data.

Preferably, the method is used for defending against adversarial attacks and/or detecting adversarial attacks (in particular on the (raw) sensor data).

The suggested method offers the advantage that it may be used to remove different types of adversarial attacks at the same time and it overcomes the drawbacks of the prior art standard VAE for adversarial denoising of an unwanted "posterior collapse".

In particular the defense unit is configured to remove and/or reduce a potential adversarial perturbation from the sensor data. In particular the defense unit is used for removing and/or reducing a potential adversarial perturbation from the sensor data, in particular from adversarial (attacked) sensor data (which comprise an adversarial perturbation).

As an adversarial perturbation in particular a (well-designed and in particular unintentional) perturbation of sensor data, as for instance raw sensor data, in particular carried out and/or initiated by a (non-authorized) Third Party is understood, which typically is hard to detect via human eyes. So humans can still understand the objects correctly, but deep neural networks can produce different results (for instance in perception tasks) than what is expected. For instance, the effect of an adversarial perturbation of sensor data, for instance a change of an image, may be that the deep neural network misclassifies the sensor data, as for instance the image, as a wrong target.

The expression "reducing at least one adversarial perturbation" in particular is to be understood as lower the effect of the adversarial perturbation and/or the adversarial noise. In particular reducing at least one adversarial perturbation makes the sensor data with the reduced adversarial perturbation less vulnerable for being misinterpreted in a subsequent perception task (based on an artificial neural network), for instance for being misclassified.

Preferably, by removing the at least one adversarial perturbation and in particular by removing all adversarial perturbations the original (in particular non-attacked) sensor data (and/or sensor data prior to being attacked) are restored essentially.

Preferably, for reducing and/or removing the at least one adversarial perturbation the sensor data are (processed and/or) modified by the defense unit.

Preferably, the defense unit utilizes and/or accesses a (in particular trained) machine learning defense model for removing and/or reducing a potential adversarial perturbation from the sensor data (and/or for adversarial defense against and/or detection of adversarial attacks on spatially resolved (raw) sensor data), wherein in particular the (machine learning) defense model includes a set of parameters set to values learned as a result of a training process.

Preferably, the (in particular trained) machine learning defense model is configured to determine output sensor data based on the sensor data, where for the determination of the defense output sensor data, the sensor data are mapped from a, in particular high dimensional, input space representation into a, in particular low dimensional, latent space representation of the sensor data and a vector quantization operation is applied to the latent space representation of the sensor data.

The sensor data may be identical to the spatially resolved raw sensor data. Preferably, the sensor data are, in particular spatially resolved, sensor data, which are derived from the spatially resolved raw sensor data by preprocessing the spatially resolved raw sensor data (via a computer-implemented method step).

The (computer-implemented) preprocessing (method) step may include resizing (to a preset input size, for instance for a neural network, in particular while keeping the aspect ratio constant) and/or normalizing the (raw) sensor data (e.g. subtracting a measurement value mean of the entire (raw) sensor data from the raw sensor data) and/or division by a standard deviation and/or flipping and/or cropping the (spatially resolved) raw sensor data and/or sensor data. Such preprocessing steps allow a faster and more stable training of the data. For instance, the (spatially resolved) raw sensor data and/or the sensor data are preprocessed in a computer-implemented data preprocessing step such that the data are in an appropriate input format for a subsequent sensor data processing step as determining the defense output sensor data (in particular such that the data are in an appropriate input format for a neural network). For instance, a camera image may be cropped to remove unwanted image regions, e.g. the bonnet of the ego vehicle if visible in the camera image.

In particular, the spatially resolved raw sensor data (or sensor data) are transferred from the (at least one) sensor device to the defense unit. Preferably, the defense unit receives the raw sensor data and/or the sensor data which are characteristic of the spatially resolved raw sensor data.

In a preferred embodiment, for the determination of the defense output sensor data, a Vector Quantized Variational AutoEncoder (VQ-VAE) is used.

In particular, the use of a (an adapted version) of a Vector-Quantized Variational Autoencoder (VQ-VAE) as an adversarial defense method is suggested.

In particular, the use of a Vector-Quantized Variational Autoencoder as denoising autoencoder is suggested. In particular, the VQ-VAE is trained to remove, in particular only, Gaussian noise. Advantageously, this generalizes to adversarial attacks in evaluation.

The use of the VQ-VAE suggested, advantageously, can learn to remove different types of adversarial attacks at the same time, while also generalizing towards other adversarial attacks that it was not trained for.

Using a VQ-VAE is advantageously also suitable for retaining most of the clean images as the mapping of clean image to its latent space followed by a subsequent decoding is straight forward and well-known. This offers huge practical advantages compared to existing methods like quilting, total variational minimization that modify the clean images as well.

Traditionally, a VQ-VAE is used to reconstruct original images similar to an Auto-encoder, but due to the vector quantization step in the embedding space, the performance of a VQ-VAE often exceeds that of a corresponding AE/VAE. The vector quantization part ensures that the embeddings learnt are discrete values, instead of a continuous valued-representation which is known to have the downside of unwanted "posterior collapse".

In particular, autoencoder are and/or are based on neural networks which consist of an encoder and a decoder. On the one hand, the encoder maps the usually high-dimensional input (includes images) to an intermediate, smaller-dimensional representation. The space of these smaller-dimensional representations is termed the latent space. On the other hand, the decoder takes as input a variable from the latent space and decodes, i.e. transforms, this latent space representation of the encoder to a high-dimensional form whose dimensions are the same as the input dimensions. The goal for the autoencoder is to approximate the identity function, that is to produce the same output as it has input. Technically, this is a trivial task, however, since the autoencoder is forced to produce the output via a lower dimensional representation (i.e. the decoder mapping the latent space representation to the output) this task is nontrivial.

Moreover, so-called variational autoencoders are in particular special types of autoencoders that do not directly take the latent space representation of the input and decode it, but rather sample from the a distribution in the latent space. That is, the variational autoencoders do not map from a single representation in the latent space to the output, but rather decode a sample from a distribution in the latent space.

Preferably, the machine learning defense model (and in particular the VQ-VAE) comprise an encoder (artificial) neural network and a decoder (artificial) neural network. In particular the encoder neural network encodes the sensor data by generating an encoder output, in particular by mapping the sensor data from the input space representation into the (low dimensional) latent space representation of the sensor data. Preferably, the decoder decodes a decoder input, which is in particular a latent space representation (which in particular is the result of processing the latent space representation of the sensor data by applying the vector quantization operation), and transforms and/or maps it to input space representation (such that the dimensions again are the same as the input space representation of the sensor data).

Preferably, the encoder output comprises for each of one more latent variables, a respective encoded vector.

In particular, so-called vector-quantized variational autoencoders utilize, contrary to normal variational autoencoders, a discrete representation of the latent space of the input. That is, the VQ-VAE maps the input to the latent space, but then utilizes a so-called codebook (a discrete set of (codebook) vectors) to find a discrete representation of the latent space vector. More specifically, the latent representation of the input is mapped - that is quantized - to a number of codes of the embedding space by finding the vectors in the codebook with minimum distance to the latent space representation of the input.

In a further preferred embodiment, a (in particular fixed) set of codebook vectors is provided. Preferably the set of codebook vectors (the so called "codebook") is a discrete set of vectors. Preferably, for the vector quantization operation, the latent space representation of the input sensor data is mapped to a number of codes in an embedding space by determining the codebook vectors from the set of codebook vectors with minimum distance to the latent space representation of the input sensor data.

Preferably, the set of codebook vectors is stored in a memory device which may be part of the defense unit and/or may be accessible by the defense unit. Preferably, the defense unit uses the set of codebook vectors in order to perform the vector quantization operation on the latent space representation of the sensor data. Providing the set of codebook vectors offers the advantage of having a tool for the quantization and, preferably, thus mapping the latent space representation of the input sensor data to a discrete space of latent codes.

Preferably, the encoder output of the sensor data and/or the latent representation of the sensor data is mapped to a number of codes of the embedding space by finding the (codebook) vectors in the codebook with minimum distance to the encoder output and/or to the latent space representation of the sensor data.

Preferably, the machine learning defense model (and/or the VQ-VAE) includes a set of trainable codebook vectors. Preferably, for the vector quantization operation, the latent space representation of the input sensor data is mapped to a number of codes in an embedding space by determining the codebook vectors from the set of codebook vectors with minimum distance to the latent space representation of the input sensor data.

In a further preferred embodiment, the set of codebook vectors (provided for the VQ-VAE and/or the machine learning defense model) is learnt as a result from a, in particular computer-implemented, training process, in which the difference of defense output sensor data determined by the defense unit based on adversarial sensor data (and/or (just) gaussian noise) compared to corresponding clean sensor data is minimized. In particular, in the training process the defense model and/or the VQ-VAE is forced to learn a set of codebook vectors that map both, adversarial and clean sensor data (in particular images) to the (essentially) same clean output (in particular defense output sensor data). This advantageously results in (indirectly) removing the adversarial perturbation from adversarially attacked images, while clean images are (essentially) reconstructed and/or (essentially) returned.

Preferably, it is proposed to extend the VQ-VAE as an adversarial defense, by learning latent space representations of both clean and adversarially attacked images mapped to the representations of the clean images. This way, an adversarial image input corresponds to its equivalent latent space representations of a clean image, and the decoder simply reconstructs the original clean image, given the corresponding latent space vector. Hence, a clean/adversarial image input, always leads to a corresponding clean (reconstructed/denoised) image that is free of adversarial perturbations.

In particular, the aim for the in particular modified VQ-VAE is that the VQ-VAE decodes both adversarially attacked and clean images (in particular essentially) to the same clean output image, such that the transformation of the VQ-VAE indirectly removes the adversarial perturbation. In particular, by means of using the VQ-VAE the adversarial noise is removable from the input images and instead the clean image can be returned without (at best) any adversarial noise. This is achieved by forcing the autoencoder to learn a set of codebook vectors that map both adversarial and clean images to the same clean output.

Via a modified loss function, in particular the difference of the decoded adversarial and the respective clean image is "punished" and thus the VQ-VAE is forced to learn appropriate codebook vectors to decode the adversarial image as the clean image.

In a preferred embodiment, the sensor data processing by the defense unit, in particular based on Vector Quantized Variational Autoencoder, is applied to the sensor data as pre-processing step prior to being fed into a target perception unit for the vehicle which is configured to perform a perception task.

In particular, the above described VQ-VAE can be applied as a pre-processing step in a perception chain for autonomous driving. Therefore, the VQ-VAE method is independent of the actual neural network used for perception and does not enforce additional requirements on the neural network used for perception (for example: modification of the training data set, modification of the training itself, etc.), which other methods (such as adversarial training) do.

In a preferred embodiment, the sensor data are processed by the defense unit in real-time. This allows to process the sensor data generated during the motion of the vehicle and use the defense output sensor data for real-time vehicle functions.

In a preferred embodiment, the target perception unit being supplied with the target input sensor data as input is configured to process the target input sensor data by means of an artificial neural network. In particular the defense output sensor data are used as target input sensor data.

Preferably, the defense output sensor data (or data derived from these data and/or sensor data being characteristic for the defense output sensor data) are used as target input sensor data for the target perception unit. Preferably, defense output sensor data differ from the (spatially resolved) (raw) sensor data by at least one adversarial perturbation and preferably all (determined) adversarial perturbations being removed and/or reduced compared to the (raw) sensor data.

Preferably, the target input sensor data are processed by means of an artificial neural network (in particular by the target perception unit), the artificial (target) neural network being supplied with the target input sensor data as input variables and the (target) artificial neural network maps the input variables as a function of and/or in dependence of a parameterizable processing chain to output variables, wherein the output variables are characteristic for the result of the perception task to be performed by the target perception unit and/or at least one region of interest of the (target input) sensor data (as for instance an object) and at least one class for classifying the region of interest (for instance an object).

Preferably, the target perception unit and in particular the (target) neural network generates perception output data from which a driver assistance system of the vehicle derives relevant information for partially or fully automated driving.

Preferably, the (target) (artificial) neural network is designed as a deep artificial neural network, in particular in which the parameterizable processing chain has a plurality of processing layers. Preferably, the (target) (artificial) neural network is designed as a convolutional neural network (CNN) and/or a recurrent neural network (RNN). Preferably the (target) artificial neural network is trained using predetermined training data, the parameterizable processing chain being parameterized by the training.

Preferably, the input layer of the artificial neural network is supplied with the target input sensor data, for instance a (digital) image captured by a camera and processed by the defense unit, and wherein the output layer of the target artificial neural network provides a matrix of N-dimensional output vectors, each of the N-dimensional output vectors as a probability distribution with respect to one assignment to the N classes can be interpreted in particular for an (detected) object and/or a determined region of interest.

Preferably, a reconstruction loss is calculated and/or determined based on the sensor data input to the defense unit (in particular before a random pre-processing method step) and based on, in particular compared to the defense output sensor data. Preferably, based on this reconstruction loss (in particular by comparing to at least one threshold value) it is determined (and in particular detected) (via a computer-implemented method step) whether an adversarial attack has occurred and/or whether the sensor data comprise an adversarial noise (contribution).

Preferably, the vehicle function is a function, in particular for a driver assistance system, including performing at least one (computer-implemented) perception task, in particular a computer vision task and/or detection task as 2D/3D object detection and/or semantic segmentation and/or Instance-Level segmentation, based on the, in particular, spatially resolved (raw) sensor data.

In particular, the at least one (computer-implemented) perception task (mentioned above) is performed and/or executed by a target perception unit (of the vehicle).

Preferably, the determination which sensor data are used as target input sensor data for the target perception unit is based on a sensor data processing output (data) of the defense unit.

In particular the vehicle function is a control function of the, in particular at least partially autonomously and preferably (fully) autonomously controlled, vehicle. The vehicle function may be a function being (in particular automatically) executed (at least) as part of a driver assistance system of the vehicle.

The in particular spatially resolved (raw) sensor data may be generated (and/or recorded) by the sensor device while the vehicle is in moving. Preferably, the sensor device monitors surroundings of the vehicle and particularly preferably records sensor data for the detection of (movable and/or moving and/or stationary) objects (for instance obstacles, pedestrians, vehicles, side-walks, traffic participants, traffic lights, traffic signs, roadway markings, or the like), in particular the determination of the type and/or position of the objects in the vehicle environment, their behavior, and/or lane geometries and topologies, of the surroundings of the vehicle.

Preferably, the sensor data are generated by at least one sensor device (of the vehicle) selected from a group which comprises a camera, a radar sensor, a lidar sensor, a thermal sensor, and the like and combinations thereof. These sensor devices advantageously are presently used for environment perception (of the vehicle). Preferably, the sensor device is used for at least one computer vision task/method (of the vehicle), which preferably is based on a deep neural network.

Preferably, the (spatially resolved) sensor data comprise a multitude of pixels whereas preferably each of these contains at least an intensity information. For instance, the sensor data may be an (visible light) image captured by a camera. In particular the image comprises a multitude (usually thousands) of pixels which contain color and/or brightness and/or intensity information.

The vehicle function may be a function of a vehicle component of the vehicle, for instance a perception function for at least one driver assistance system. Preferably, the vehicle component is selected from a group comprising a system for (in particular automated and/or semi-automated) driving and/or controlling the vehicle, a driver assistance system, a computer vision system, a navigation system, a warning system, a damping system of the chassis and/or vehicle, a vehicle climate control system, an entertainment system, an infotainment system, an opening system of a vehicle window, a comfort system for increasing the driving comfort of an occupant, a locking system of a vehicle door and/or a vehicle window, a vehicle locking system, a roof removal mechanism, a sunroof mechanism, a vehicle safety system (for example, a brake system), and/or a windshield wiper mechanism, or the like, and combinations thereof.

The vehicle function may also be a (different and/or new) detection and/or computer vision task (of the vehicle) initiated based on the defense output sensor data. In particular, it is conceivable that the executing the vehicle function in dependence on the defense output sensor data results in that the vehicle function is not executed or control parameters for executing the vehicle function are modified before the vehicle function is executed. Preferably, executing the vehicle function in dependence on the defense output sensor data effects the vehicle function to be changed, activated, deactivated, stopped, paused and/or adjusted (e.g. via a change of a parameter with respect to the vehicle function, in particular based on the (determined) defense sensor output data).

Preferably, the spatially resolved raw sensor data are generated and/or recorded in a joint recording (and thus at the same time). It is conceivable that more recordings, in particular recorded by one sensor device and preferably recorded one after the other (in immediate succession), are used as raw sensor data.

The sensor device may be arranged on and/or in the vehicle. The sensor device may be arranged on an outer part of the vehicle.

Preferably, the vehicle (whose vehicle function is to be executed and/or which retrieves the defense output sensor data and/or the attack parameter) comprises the sensor device for environment detection of the vehicle, particularly preferred as a (in particular fixed) component of the vehicle.

It is conceivable that the sensor device for environment detection of the vehicle is the sensor device of a vehicle (and/or another object) which is different from the vehicle whose vehicle function is to be executed. For instance, it may be the sensor device of another vehicle which is in communication connection with the vehicle (e.g. via "Vehicle-to-Vehicle", V2V communication and/or "Vehicle-to-Infrastructure", V2I communication, and/or "Vehicle-to-X", V2X communication).

The present invention is further directed to a computer-implemented method for training a machine learning defense model for adversarial defense against and/or detection of adversarial attacks on spatially resolved raw sensor data for environment perception generated by at least one sensor device for environment detection of a vehicle, including providing a training dataset comprising a plurality of clean spatially resolved training sensor data and a plurality of adversarial spatially resolved training sensor data, wherein in particular each adversarial training sensor data can be associated with clean spatially resolved training sensor data. Adversarial sensor data may also be referred to as attacked sensor data.

The method further includes training, based on the training dataset, a machine learning defense model for removing and/or reducing a potential adversarial perturbation from spatially resolved input sensor data being supplied to the machine learning defense model as input variables, wherein the machine learning defense model includes a set of trainable parameters and is configured to determine output sensor data based on the spatially resolved input sensor data, wherein for the determination of the defense output sensor data, the input sensor data are mapped from a high dimensional input space representation into a low dimensional latent space representation of the input sensor data and a vector quantization operation is applied to the latent space representation of the input sensor data.

Preferably, the machine-learning defense model is configured, suitable and/or intended to carry out one or more of the method steps already described above in the context of the defense unit in connection with the above-described method, in particular described above in the context of the defense model, individually or in combination with each other. Conversely, the method described above (the method for, in particular automatically, executing a vehicle function) may use the trained machine-learning defense model.

In particular a training dataset of spatially resolved training sensor data capturing a vehicle environment is provided and/or generated.

The method in particular relates to using artificial intelligence for adversarial defense against and/or detection of adversarial attacks on spatially resolved raw sensor data for environment perception generated by at least one sensor device for environment detection of a vehicle.

Preferably, the clean training (spatially resolved) sensor data are used as ground truth in the training process.

In a preferred embodiment, the machine learning defense model is based on a Vector Quantized Variational AutoEncoder (VQ-VAE).

Preferably, the defense model is based on at least one and preferably on two (artificial) neural networks (an encoder neural network and a decoder neural network) which each are designed as a deep artificial neural network, in particular in which the parameterizable processing chain has a plurality of processing layers. Preferably, each (artificial) neural network is designed as a convolutional neural network (CNN). Preferably each artificial neural network is trained using predetermined training datasets of spatially resolved training sensor data, the parameterizable processing chain being parameterized by the training.

Preferably, the encoder neural network and the decoder neural network are trained jointly.

Preferably, the input layer of the encoder artificial neural network is supplied with the (spatially resolved) training sensor data and wherein preferably the output layer of the decoder artificial neural network provides defense output sensor data.

In a preferred embodiment, the machine learning defense model includes a set of trainable codebook vectors and wherein for the vector quantization operation, the latent space representation of the input sensor data is mapped to a number of codes in an embedding space by determining the codebook vectors from the set of codebook vectors with minimum distance to the latent space representation of the input sensor data.

In a preferred embodiment, for training the trainable codebook vectors, a loss function is determined and/or calculated by comparison of, in particular the difference of, output sensor data determined by the machine learning defense model from adversarial training sensor data and clean training sensor data associated to the adversarial training sensor data. This advantageously "forces" the codebook vectors to be selected such as to represent codebook vectors of clean sensor data and/or to generate clean defense output sensor data.

Preferably, the loss function being determined and/or calculated for the training of the trainable codebook vectors is characteristic of a difference of the decoded adversarial sensor data and the respective (decoded) clean sensor data. Preferably, (in each training step) the (trainable) codebook vectors are updated based on the (determined and/or calculated) loss function.

In a preferred embodiment, the adversarial (or attacked) spatially resolved training sensor data are generated by adding an adversarial perturbation to a clean spatially resolved training sensor data.

Preferably, attacked training sensor data (which in particular are the adversarial spatially resolved training sensor data) are generated based on clean training sensor data by processing the clean training sensor data, preferably by adding a in particular pre-computed adversarial perturbation (in particular of the same dimension of the clean training sensor data). Preferably, essentially each pixel value of the (clean) training sensor data is modified by the (computer-implemented) conversion of the (clean) training sensor data to an attacked training sensor data (in particular by adding the adversarial perturbation).

This (adversarial) perturbation is preferably adversarial in nature such as computed from a strong attack such as a projected gradient descent (PGD) attack (see Madry et al: Towards Deep Learning Models Resistant to Adversarial Attacks: In arXiv:1706.06083v4, 2019; see https://arxiv.org/pdf/1706.06083.pdf) or simply a traditional noise source such as Gaussian/Uniform/Bimodal noise (as done by Cho et al.: DAPAS: Denoising Autoencoder to Prevent Adversarial attack in Semantic Segmentation, In: arxiv: 1908.05195; https://arxiv.org/abs/1908.05195). For details of generating adversarial perturbation as a projected gradient descent (PGD) attack and/or Gaussian and/or Uniform and/or Bimodal noise as adversarial perturbation, these two references are hereby incorporated by reference.

For example, as clean training dataset of clean (spatially resolved) sensor data for instance cityscapes datasets may be used, as for instance datasets described in M. Cordts, M. Omran, S. Ramos, T. Rehfeld, M. Enzweiler, R. Benenson, U. Franke, S. Roth, and B. Schiele, "The Cityscapes Dataset for Semantic Urban Scene Understanding," in Proc. of the IEEE Conference on Computer Vision and Pattern Recognition (CVPR), 2016. (see: https://www.cityscapes-dataset.com (cityscapes-dataset.com); https://www.cityscapes-dataset.com/wordpress/wp-content/papercite-data/pdf/cordts2016cityscapes.pdf). For details and as an example of training data of (clean) training sensor data (images) which may be used for training the machine learning defense model and/or the Vector Quantized Variational Autoencoder, this reference is hereby incorporated by reference.

The applicant found that both, training on just noise, or just attacks works fine. Training with non-adversarial noise helps reduce complexity as generating attacks is an expensive step. For details for that, the publication by Cho et al.: DAPAS: Denoising Autoencoder to Prevent Adversarial attack in Semantic Segmentation (In: arxiv:1908.05195; https://arxiv.org/abs/1908.05195) is hereby incorporated by reference.

In a preferred embodiment, the training is done with just noise. In particular the training dataset may consist of training images and/or training data which only show ("traditional" or non-adversarial) noise but in particular no adversarially (attacked) images or training data.

In a preferred embodiment, the training data set comprises just adverarial (attacked) training data (or training images).

In a preferred embodiment, the training data set comprises both, adversarial (attacked) training data (or training images) and (non-adversarial) noise training data (or training images).

The present invention is directed to the use of a this trained machine-learning defense model wherein (raw) sensor data are input and defense output sensor data are output (by the machine-learning defense model) and/or the use of a Vector Quantized Variational Autoencoder for adversarial defense against and/or for detection of adversarial attacks on spatially resolved (raw) sensor data (in particular for environment perception) preferably generated by at least one sensor device for environment detection of the vehicle.

In particular the present invention is directed to the use of the trained machine learning defense model and/or the use of a Vector Quantized Variational Autoencoder for removing adversarial perturbations from adversarial (in particular adversarially attacked), in particular spatially resolved, sensor data (in particular images). Preferably, the use of a Vector-Quantized Variational Autoencoder as denoising autoencoder is suggested.

The present invention is directed to a machine learning unit comprising a processor unit which is configured and intended to perform the above described (computer-implemented) method (and/or a preferred embodiment) for training a machine learning defense model for adversarial defense against and/or detection of adversarial attacks on spatially resolved (raw) sensor data for environment perception.

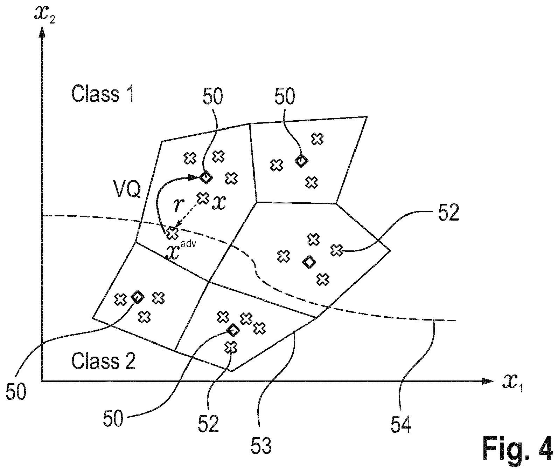

The present invention is further directed to a detection system and/or a detection method, in particular for detecting an attack, using a VQ-VAE. In particular, by means of that, a trivial detection system using a VQVAE can be designed such that the difference of denoised/reconstructed image with the input image can be compared to a threshold. If this is high, it is classified as adversarial, if not it would be clean. This relies on the assumption that the clean images are usually closer to the codebook vector representation than attacked images, as also briefly explained below in Fig. 4 and Section 3.3.1 (why VQVAE works?).

Preferably, the detection system and/or the detection method comprise a threshold for the reconstruction error of the trained VQ-VAE. Preferably, for given (pre-processed) sensor data the reconstruction error of the trained VQ-VAE is determined and/or calculated (via computer-implemented method steps) and an attack parameter is determined based on the reconstruction error (via a computer-implemented method step). For that, at least one threshold value may be preset which may be fixed and/or be variable. Preferably, this threshold value is derived and/or set in dependence of a training process of the VQ-VAE.

Preferably, the detection system is configured to carry out and/or the detection method comprises at least one or more steps (individually or in combination), in particular the step of processing sensor data of the method for (automatically) executing a vehicle function described above.

The present invention is further directed to a defense unit for a vehicle for adversarial defense against and/or for detection of adversarial attacks on spatially resolved raw sensor data for environment perception generated by at least one sensor device for environment detection of the vehicle, wherein the defense unit is configured to receive sensor data which are characteristic for the spatially resolved raw sensor data, characterized in that the defense unit is configured to process the sensor data, hereby determining defense output sensor data.

According to the invention for the determination of the defense output sensor data, the sensor data are mapped from a high dimensional input space representation into a low dimensional latent space representation of the sensor data and a vector quantization operation is applied to the latent space representation of the sensor data.

Preferably, the defense unit is configured to provide and/or output at least one signal in dependence on the defense output sensor data. Preferably, this signal is transferred to a control unit of the vehicle, which is configured to execute at least one vehicle function in dependence on this signal.

In a preferred embodiment, the defense unit is configured to use a Vector Quantized Variational AutoEncoder (VQ-VAE).

Preferably, the defense unit is configured, suitable and/or intended to carry out one or more of the method steps already described above in the context of the defense unit in connection with the above-described method (for automatically executing a vehicle function), in particular described above in the context of the defense model, individually or in combination with each other. Conversely, the method described above (the method for, in particular automatically, executing a vehicle function) may be (at least partially and in particular the method steps described in the context of the above mentioned defense unit) carried out by the defense unit described here.

Preferably, the defense unit comprises at least one processor executing the above-described method steps performed (individually and/or in combination) by the defense unit.

The present invention is further directed to a vehicle, in particular motor vehicle and/or designed for autonomous or partially autonomous controlled driving, comprising a defense unit for a vehicle according an embodiment described above. Preferably the defense unit is a fixed component of the vehicle.

It is also conceivable, that the defense unit is an external unit, which may be based on an external (backend) server (in particular of a OEM and/or a vehicle manufacturer or a service provider).

Preferably, the vehicle comprises a control unit (communicatively) connected to the defense unit and having at least one output for controlling at least one actuator of the vehicle, the control unit being configured to perform the control function as a function to execute a vehicle function in dependence of the defense output sensor data determined by the defense unit, in particular by controlling the at least one actuator.

The vehicle may in particular be a (motorized) road vehicle. The vehicle may be a motor vehicle, which is in particular a motor vehicle controlled by the driver himself ("driver only"), a semi-autonomous, autonomous (for example, autonomy level 3 or 4 or 5 (of the SAE J3016 standard)) or self-driving motor vehicle. In this context, autonomy level 5 refers to fully automatic driving vehicles. Likewise, the vehicle may be a driverless transport system. The vehicle can be controlled by a driver or drive autonomously. Furthermore, in addition to a road vehicle, the vehicle may also be an air cab, an aircraft, and other means of transportation or another type of vehicle, such as an air, water, or rail vehicle.

The present invention is further directed to a computer program or computer program product comprising program means, in particular a program code, which represents or codes at least the method steps of each of the two methods according to the invention and preferably one of the described preferred embodiments and is designed for execution by a processor device.

The present invention is further directed to a data memory on which at least one embodiment of the computer program according to the invention or of a preferred embodiment of the computer program is stored.

The present invention of the method for automatically executing a vehicle function of a, in particular at least partially autonomously controlled, vehicle based on spatially resolved (raw) sensor data for environment perception (and/or for defense against and/or detection of adversarial attacks) has been described in the context of a vehicle. However, the present invention is also applicable to any methods and applications or devices or systems, in particular for security-critical and safety-critical applications such as automated driving, bio-medical disease detections and the like, as well as methods and/or systems, which include, in particular AI-based, perception modules, such as any autonomous system, and/or perception functions. The applicant reserves the right to claim a method and defense unit directed thereto as well.

Further advantages, objectives and features of the present invention will be described, by way of example only, in the following description with reference to the appended figures. In the figures, like components in different embodiments can exhibit the same reference symbols.

The figures show:

Fig. 1 a schematic view of a vehicle comprising an evaluation unit according to an embodiment of the invention;

Fig. 2 an overview of an approach underlying a preferred embodiment of a method according the invention;

Fig. 3 an overview of a method according to a preferred embodiment of the invention;

Fig. 4 an overview of the effect of vector quantization (VQ) layer on corrupted images;

Fig. 5 an architecture of the VQVAE according to a preferred embodiment;

Fig. 6 a detailed overview of the VQ layer according to the preferred embodiment used in the bottleneck of VQVAE architecture as illustrated in Fig. 5;

Fig. 7 a table listing types of noise and parameter settings used;

Fig. 8 a table showing the performance of baseline segmentation models used on both datasets;

Fig. 9 a table showing an effect of varying VQVAE codebook parameters $(D, K)$ on target DNN;

Fig. 10 two graphs showing an robustness evaluation of ICNet with and without using a VQVAE as an input pre-processor;

Fig. 11 a    qualitative visualization of the effect of VQVAE (RC) on a sample clen image;

Fig. 12    an adversarial attack on the ICNet using the fast gradient sign method (FGSM);

Fig. 13a    comparison of pre-processor methods on different corruption types for the ICNet model trained on Cityscapes dataset; and

Fig. 14a    table showing an overview of robustness evaluation results using both VQVAE and AE as preprocessors trained using RN and RC strategy.

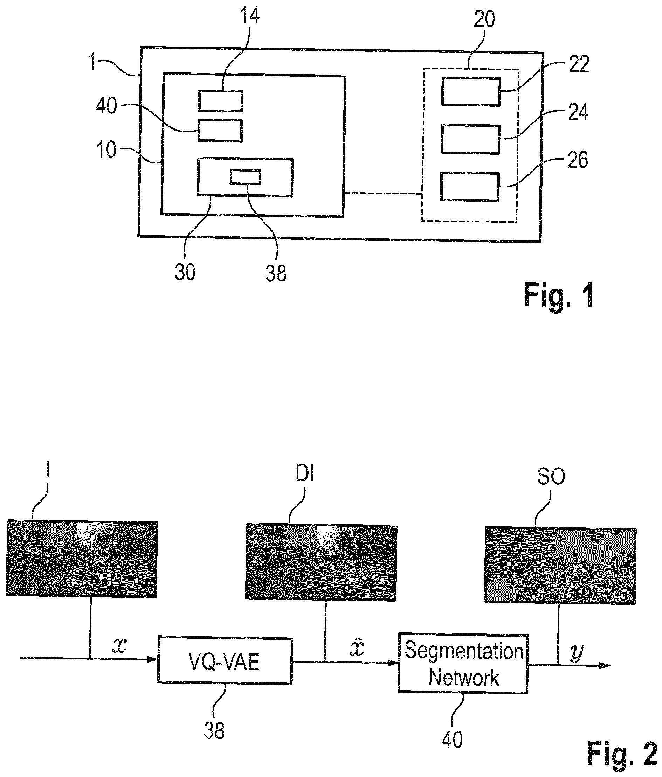

Fig. 1 shows a schematic view of a vehicle 1 whereas the vehicle 1 here comprises three different sensor devices 22, 24, 26, each of them preferably being part of an environment perception system 20 of the vehicle 1. One of these sensor devices may be for instance a camera capturing a (digital) image (in particular of the vehicle environment).
These generated spatially resolved raw sensor data (here the captured image) are supplied to a processing unit 10 processing these (raw) sensor data and/or to a defense unit (or defense module) 30 (which may be part of the processing unit 10 or which may be executed by the processing unit 10 comprising at least one processor). The defense unit 30 preferably comprises a Vector Quantized Variational Auto Encoder unit (VQ-VAE unit) 38 for processing the sensor data based on a Vector Quantized Variational Auto Encoder (which are preferably pre-processed (raw) sensor data).
The defense unit 30 outputs defense output sensor data, here a denoised image, which are/is supplied as target input sensor data, here as target input image, with the target perception unit 40. The target perception unit 40 performs a perception task based on the target input image (in general based on the target input sensor data) as for instance generating a segmentation mask.
Preferably, the target perception unit 40 (and/or the defense unit 30) is configured to provide and/or output at least one signal in dependence on the at least one perception task output parameter (which is determined in the perception task) and/or the defense output sensor data. Preferably, this signal is transferred to a control unit 14 of the vehicle 1, which is configured to execute at least one vehicle function in dependence on this signal.
Fig. 2 - Fig. 9 serve to explain preferred embodiments of the method improving the robustness of semantic segmentation using Vector Quantized Variational Autoencoders in detail in Sections 1 - 6 below.

Section 1 Introduction

Deep learning based algorithms have shown remarkable performance in solving a variety of vision tasks such as semantic segmentation [1, 2, 3, 4], object detection [5, 6, 7], image classification [8, 9, 10], etc. However, these state of the art models are not robust to a variety of input distributions such as adversarial examples [11], sensor noise, photo metric changes, camera blur [12] etc. In the real-world, perception models need to meet several kinds of requirements such as high accuracy, high robustness to likely input distributions, and at the same time be real-time energy and memory efficient.
These requirements are often conflicting with one another that require finding intermediate trade-offs. Recently, the lack of robustness problem has gained a lot of research attention, especially in the case of adversarial examples. Adversarial examples are carefully perturbed images that are often imperceptible to the human eye, but cause severe misclassifications, when fed into a neural network. Most existing adversarial defenses are either computationally very expensive [13, 14], offer limited improvements [15, 16, 17], do not scale to large complex tasks such as semantic segmentation [18], or are real-time infeasible [19, 20]. On the other hand, it remains unclear if adversarial defense methods also help improve robustness to real-world corruptions such as noise, blur, photo-metric changes, etc.
Samangouei et al. [19] proposed to use generative adversarial networks (GAN's) as a means to defend against adversarial examples. However, this was soon outperformed by Defense-VAE [20], a variational autoencoder that offered superior results while being 50_ faster. However, training VAEs is considered hard due to the issue of posterior collapse [21], i.e. where latents are simply ignored when paired with a powerful decoder. This limits the large scale adoption of Defense-VAE as a reliable real-world defense.
Meanwhile, van den Oord et al. [22] proposed the vector-quantized variational autoencoder (VQVAE) which did not suffer from the issue of posterior collapse. Their key contribution was to add a vector quantization (VQ) layer in the bottleneck of a VAE, such that the learnt latent distribution was discrete instead of continuous. It was shown that VQ-VAEs consistently outperformed continuous VAEs while operating at a much smaller bitrate.
The applicant empirically evaluates the VQ-VAE from a robustness perspective for a complex semantic segmentation task. More specifically, the applicant trains a denoising VQ-VAE on several data corruptions and study its effects on both adversarial attacks, and real-world corruptions. Through extensive experiments and ablation studies on two models and two datasets, the applicant observes that a VQ-VAE consistently outperforms a comparable AE in terms of improving adversarial robustness while operating at a smaller bitrate. This has remarkable advantages from a practical real-world setting. From the applicant's empirical evaluations, the applicant shows that the adversarial robustness improvements stem primarily from adding the vector quantization layer in the bottleneck.

The detailed description of preferred embodiments is structured as follows: Section 2 reviews the related work in the field of denoising auto encoders with a focus on VQ-VAE along with state-of-the-art adversarial attacks and defenses. In Section 3, the details of the proposed method along with two training strategies is described. In Section 4, the details of our experimental setups is described. In Section 5, the applicant's results and observations are presented. Finally, it is concluded in Section 6.

Section 2 RELATED WORK

In this section, the related work in adversarial defenses using denoising autoencoders and generative models is highlighted.

Denoising Autoencoders as a Defense. Here, the pre-processor is replaced by another DNN that performs the task of image denoising by using either denoising autoencoders or generative models such as GANs. The defense DNN is usually trained on a set of adversarial images using a standard mean squared error based reconstruction loss. A few well-known defense methods that are based on autoencoders are MagNet [23], HGD [24], DDSA [25] among many others [26,27, 28]. Most of these methods outperform adversarial training when tested in gray-box settings but fail in white-box settings. A few approaches that depend on generative models such as PixelDefend [29] and Defense-GAN [19]. However, both PixelDefense and DefenseGAN can be outperformed by simple gradient approximations as shown by [30]. Li et al. [20] then proposed a variational autoencoder based approach called Defense-VAE that outperformed most of the earlier defenses while being significantly faster. Unfortunately, most of these methods were tested only on toy datasets such as MNIST and CIFAR-10 on a relatively easier task of image classification. More so, method comparisons is also non-trivial since the proposed architectures were optimized for specific datasets. The only work that comes close to the applicants is one of the most recent ones called DAPAS [31] where a denoising autoencoder is used to defend a semantic segmentation model on the PASCAL VOC 2012 dataset. In contrast to the others, they proposed an attack-agnostic approach by training the autoencoder only on gaussian, uniform and bimodal noise and evaluated with attacked images. Since the autoencoder does not care how the denoised image is used later, it also makes the overall approach task-agnostic.

Motivated by DAPAS [31], the aim underlying the present invention to investigate denoising autoencoders in more detail. While autoencoders tend to outperform conventional preprocessors by quite a margin, unfortunately there are also several limitations. First, they add further computational complexity, thereby increasing inference time significantly. However, by carefully choosing a compression ratio, the inference time can be further decreased and a trade-off can be reached. Second, a DNN based defense can also be attacked in a pure white-box setting. Depending on the application domain, a white-box setting might or might not be relevant since often all details of the defense and the model are not released and kept confidential. In automated driving for example, gray-box and black-box settings are more relevant.

Section 3 METHOD

In this section, technical details of a preferred method are described. But first, some mathematical notation is introduced.

Section 3.1 Mathematical Notations

Let $\mathbf{x} \in \mathbb{G}^{H \times W \times C}$ be a clean image in the spatial domain with height H, width $W$, $C$ = 3 color channels, set of integer gray values $\mathbb{G}$, and $x \in \chi$, where $\chi$ represents a dataset. Given a clean image x, let $\tilde{x}$ be the corrupted image such that $\tilde{x} = n_a(x)$, where $n_a(.)$ is some kind of a noise function and $a$ is the type of noise. In case of an adversarial attack, the noise function $n_{adv}(.)$ is simply an additive function, i.e.

$$\tilde{\mathbf{x}} = \mathbf{x}^{adv} = \mathbf{n}_{adv}(\mathbf{x}) = \mathbf{x} + \mathbf{r} \tag{1}$$

where $\mathbf{r} \in \mathbb{R}^{H \times W \times C}$ denotes the noise (also called an adversarial perturbation). This adversarial perturbation r is usually computed via solving a constrained optimization problem, also called an adversarial attack, on a target DNN architecture. These images, whether clean x or noisy $\tilde{x}$ are fed as an input to a semantic segmentation model $\mathfrak{F}$ (x,θ) having network parameters θ and output $y = \mathfrak{F}(\mathbf{x},\theta) \in [0,1]^{H \times W \times |s|}$ , where s is a set of output classes that we care about, and |s| being the number of classes. In the presence of a denoiser (as shown in Fig. 2), the input image x is first denoised using a denoising autoencoder that outputs a reconstructed image $\hat{x} \in G^{H \times W \times C}$, before feeding it to the segmentation model.

Figure 2 shows an overview of a preferred embodiment of the method according to the invention which is in detail described here. A VQVAE (signed by reference sign 38) is used as an input pre-processor that reconstructs clean images (signed by reference sign DI) from noisy or clean inputs (signed by reference sign I). During training, random noise or corruptions are added to clean images. During inference, the input image is directly fed to the VQ-VAE and the reconstructed output is then sent to the target segmentation model (compare segmentation network signed by reference sign 40).

Section 3.2: Vector Quantized Variational Autoencoders (VQ-VAE)

Vector-Quantized Variational Autoencoders [22] were introduced as a new family of variational autoencoders (VAEs) that learns discrete latent variables instead of continuous latent variables by employing a vector quantization(VQ) [32] layer in the bottleneck. Learning discrete vectors offers significant advantages over conventional VAE, such as higher quality reconstruction, faster training, higher compression, and most importantly no posterior collapse [21]. An encoder first maps observations onto a sequence of discrete latent variables, and a decoder then reconstructs the observations from these discrete variables. Both encoder and the decoder use a shared codebook. Mathematically speaking, the encoder performs a non-linear mapping of the input image x to a bottleneck vector

$$f_e(\mathbf{x}) \in \mathbb{R}^{F \times D}$$

where $F$ and $D$ indicate flattened dimensions of the bottleneck. This vector is then quantized (denoted as $Q(.)$) to prototype vectors in the codebook $e_k \in \mathbb{R}^D$ , where $k \in [1,2, ..., K]$, using a nearest neighbor search as follows

$$\tilde{f_e}(\mathbf{x}) = Q(f_e(\mathbf{x})) = e_k \text{ where } k = \underset{j}{\arg\min}\left\| f_e(\mathbf{x}) - e_j \right\| \tag{2}$$

The output of quantization is such that each pixel of the bottleneck representation $f_e(x)$ is replaced by an index $k \in \{1, 2, ..., K\}$ of the corresponding closest codebook vector $e_k$. Note that each pixel here actually refers to a vector computed across channels with $D$ dimensions. Thereafter, these indices are passed on to the decoder for reconstruction. The decoder maps back the received indices $k$ to their corresponding vectors $e_k$ in the codebook, from which it reconstructs the data to output an image $\hat{x}$ via another non-linear function. To learn these mappings, the gradient of the reconstruction error is then back-propagated through the decoder and to the encoder using a straight-through gradient estimator. The objective of training is to learn the weights of the encoder, decoder as well as the codebook vectors using the following loss function

$$J = \|x\text{-}\hat{x}\|^2 + \|sg[f_e(x)] - e\|_2^2 + \beta\|f_e(x) - sg[e]\|_2^2. \tag{3}$$

Here, $\hat{x}$ denotes the output reconstructed image, and sg[-] is defined as a stop gradient operator that restricts the computation of the gradient during back-propagation by defining it as an identity function during the forward pass. β is a weightage parameter controlling the influence of the commitment loss.

Section 3.3 VQVAE as a denoising autoencoder

Although VQVAEs were originally proposed as a powerful generative model that can produce high quality images using a powerful autoregressive decoder, they can easily be adapted as a denoising autoencoder from a robustness perspective. First an intuition on why VQVAEs make sense from a defense perspective is given. Then an overview of a proposed method (according to a preferred embodiment) is given.

Section 3.3.1 Why VQVAEs?

From a robustness perspective, the aim of denoising is to map corrupted/noisy images to clean images as clean images lead to robust segmentation outputs. At the same time, unperturbed (clean) input images should barely be altered. A VQ-VAE is designed primarily to do this kind of mapping but in the latent space. Fig. 4 helps provide a further intuition on why VQ-VAE works.

An original image x when perturbed with an adversarial perturbation r, leads to a misclassification of the target DNN as the decision boundary is crossed. However, due to vector quantization, the resulting image $x^{adv}$ is mapped onto the closest prototype vector in the codebook which is essentially a lot closer to the original clean image x than the misclassified perturbed image $x^{adv}$. Note that this mapping happens in the compressed latent space instead of the much larger RGB pixel space, however the analogy still holds. In comparison, the effect of quantization on clean images is much smaller since the VQVAE is explicitly trained to meet this objective using the reconstruction loss (see Eq. 3). The same notion can also be extrapolated to non-adversarial images, i.e. on real-world corrupted images. Hence, by using a VQVAE all input images are mapped on to clean images in the latent space before being fed into the segmentation model. Therefore, adversarial noise is effectively removed while clean images are largely unaffected.

Section 3.4 Training Strategy

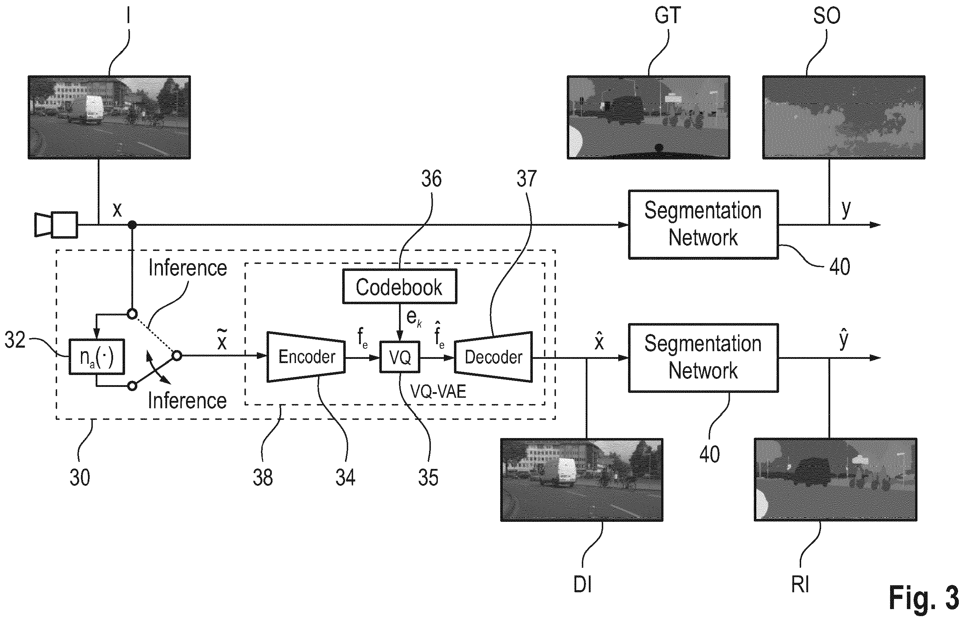

As shown in Fig. 3, according to the (here proposed) preferred embodiment, it is trained on two different noise types, called random noise (RN) and random corruptions (RC). During training, a clean image input is perturbed by adding one of the two noise sources, before being fed into the VQVAE model. Thereafter, the VQVAE performs the task of denoising such that the output remains as close to the clean unperturbed input as possible.

During inference, the noise addition step ($n_a(\cdot)$) is skipped, i.e. the input image is fed directly into the VQVAE. The VQVAE then outputs a reconstructed image $\hat{x}$ which is then fed into the target segmentation model.

Figure 4 provides an overview of the effect of vector quantization (VQ) layer on corrupted images. The vector quantization layer maps each input image (clean or corrupted) back to the closest prototype vector in the codebook. The crosses (see reference sign 52) illustrate an example input vector. The lozenge (see reference sign 50) illustrate a Codebook vector. The lines signed by reference sign 53 illustrate Voronoi cell boundaries. The dashed line signed by reference sign 54 illustrates a decision boundary.

Section 3.4.1 Training with Random Noise (RN)

Typically, an autoencoder is used to learn an identity function, i.e. the output is the same as the input. However, a denoising autoencoder takes a partially corrupted input and tries to reconstruct the original undistorted clean input. Existing adversarial defense methods based on autoencoders usually train on adversarially perturbed images directly [23, 24, 25]. However, this introduces a significant training overhead of computing multiple attacks that often does not scale. Even in the best case, such defenses do not work well on unseen attack types and settings.

Cho et al. [31] made significant contributions by proposing DAPAS, a denoising autoencoder trained only on gaussian, uniform or bimodal noise but could still defend against unseen adversarial attacks even with different attack settings. Not training on adversarial images directly has many practical benefits, as the defense can be deployed in an attack- and task-agnostic way. Motivated by their work, we also train a VQVAE as a pure denoising autoencoder, i.e. trained on randomly sampled gaussian noise from a specified range. More specifically, the training process (in particular according to a preferred embodiment) is defined as follows (see Fig. 3):

1. The clean input image x is perturbed to $\tilde{x}$ by stochastically (i.e. randomly) adding gaussian noise

$$r_{rn} \sim \mathcal{N}(\mu, \sigma)$$

such that

$$\tilde{x} = n_{rn}(x) = x + r_{rn} \tag{4}$$

where $\mu = 0$ denotes zero mean and $\sigma \in [0, 0.3]$ denotes the standard deviation of the gaussian noise distribution.

2. The perturbed image $\tilde{x}$ is fed into the encoder of the VQVAE that outputs a bottleneck vector $f_e$.

3. The vector quantization (VQ) layer replaces the bottleneck vector $f_e$ by the closest codebook vector

$$\tilde{f}_e$$

using a nearest neighbor search. Note that this step is lossy.

4. The decoder of the VQVAE takes the quantized vector

$$\tilde{f}_e$$

as input and reconstructs it to $\hat{x}$ which is as close to the original clean image x as possible.

5. Finally, the reconstructed image $\hat{x}$ is fed into the target semantic segmentation model that outputs the robust segmentation map $\hat{y}$.

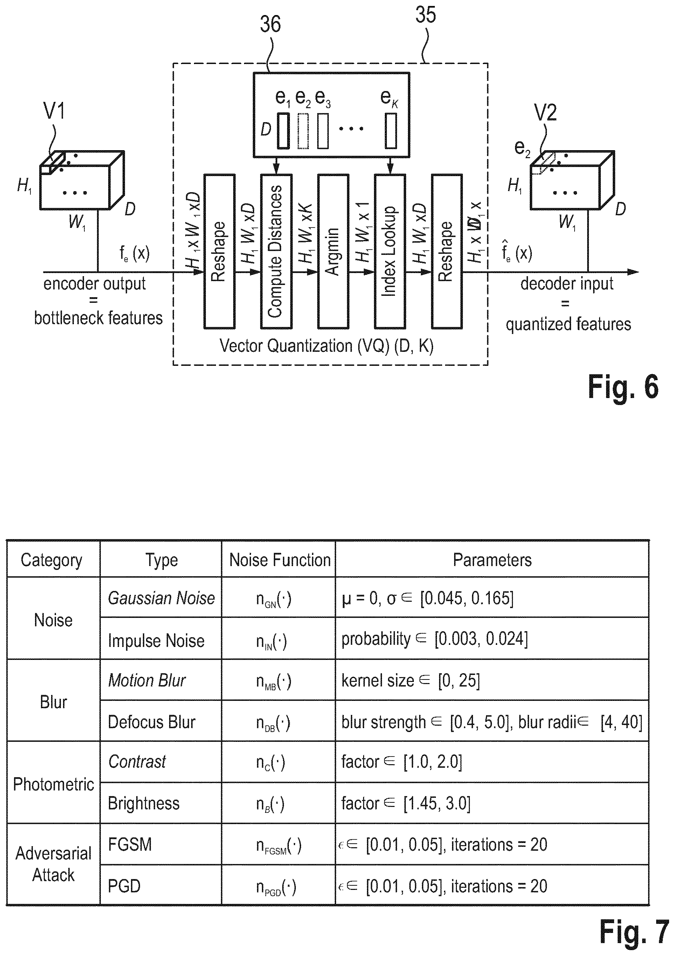

The table depicted in Fig. 7 shows types of noise and parameter settings used. The ones marked in italics are used during training in the random corruption (RC) training strategy.

Section 3.4.2 Training with Random Corruptions (RC)

Training a denoising autoencoder only on random gaussian noise is unlikely to generalize well to other realistic corruptions such as brightness, contrast, blur, etc. Therefore, we also investigate the effect of adding several kinds of corruptions together and see if it generalizes to both unseen attacks and corruptions. Following [12], we categorize real-world corruptions into three key types, i.e. noise, blur and photometric as shown in the table depicted in Fig. 7.
Based on this categorization, one noise type from each category i.e. gaussian noise, motion blur and contrast is chosen (in the proposed preferred embodiment) and they are grouped together as random corruptions (RC). The VQVAE is then trained on images randomly sampled across different parameter settings of each of these three noise types together. More specifically, the training process is now defined as follows:

1. The clean image x is corrupted to produce $\tilde{x}$ by applying a random corruption noise function $n_{RC}$ such that $\hat{x} = n_{RC}(x)$. This noise function $n_{RC}$ is essentially a randomly selected noise function $n_a$ where $a \in$ [GN, MB, C] is the type of corruption used (as defined in the table in fig. 7).

2. The noise parameters of each noise function $n_a$ are also randomly sampled from a predefined range as shown in the table in fig. 7.

3. This corrupted image $\tilde{x}$ is further passed on to the VQVAE to produce $\hat{x}$ just as in the random noise (RN) strategy.

Section 4 EXPERIMENTAL SETUP

Section 4.1 Employed Datasets and Models

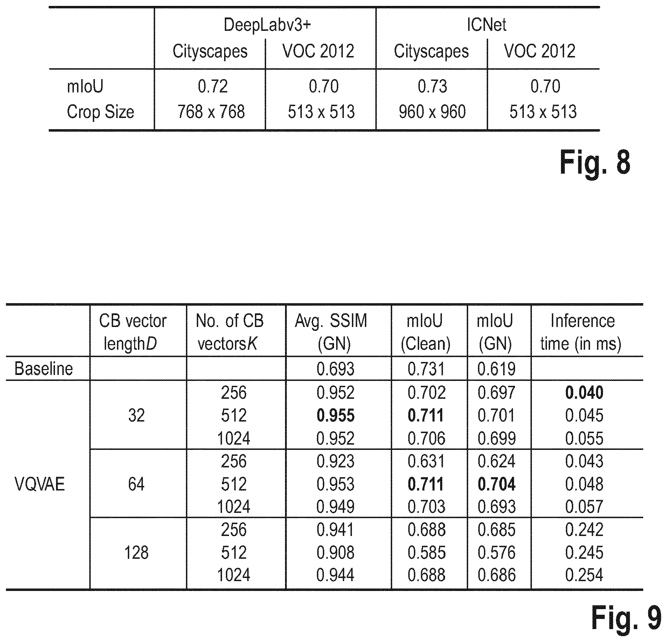

The applicant performs the experiments on two well-known publically available dataset for semantic segmentation, namely Cityscapes [33] and PASCAL VOC [34] dataset. The Cityscapes data set consists of 5;000 RGB images with resolution 2048 x 1024 of urban street scenes from different cities across Germany. The data split comprises 2;975 training images, 500 validation images, and 1;525 test images. The applicant reports his results on the validation set using the (mean) intersection over union (IoU) metric. On the other hand, the PASCAL VOC 2012 [34] dataset originally consists of 1; 464 train, 1; 449 validation and 1; 456 testing images labelled with 21 different classes. Each image has varying resolutions so random crops of 513 x 513 are used during training. Following Hariharan et al. [35], images are further augmented leading to a total of 10; 582 training images along with its corresponding annotations. The applicant uses the augmented dataset for our experiments and report results on the validation set. For both these datasets, the test set labels are not publically available.
For the target segmentation model, the applicant employs two well-known semantic segmentation models with varying backends, i.e. DeepLabv3+ [36] with MobileNet backend and ICNet [37] with ResNet50 backend. The Deeplabv3+ model incorporates depth-wise separable convolutions to enhance the receptive field whereas the ICNet incorporates a multi-scale approach to fuse features at different resolutions. Since we do not modify the target segmentation models, we directly use pre-trained models available online for both DeepLabv3+ (see https://github.com/VainF/DeepLabV3Plus-Pytorch) and ICNet (see https://github.com/liminn/ICNet-pytorch). The baseline performance for these models is reported in the table depicted in figure 8.

The table in Fig. 8 shows the Performance of baseline segmentation models used on both datasets.

Section 4.2 Denoising autoencoders

As a baseline, the effectiveness of a VQVAE is compared with a standard denoising autoencoder as proposed by Cho et al. [31] (DAPAS). However, for the sake of fair comparison, the applicant employs the exact same architecture for both, with the only difference being the vector quantization layer in the bottleneck of VQVAE. The encoder and decoder are exactly the same.

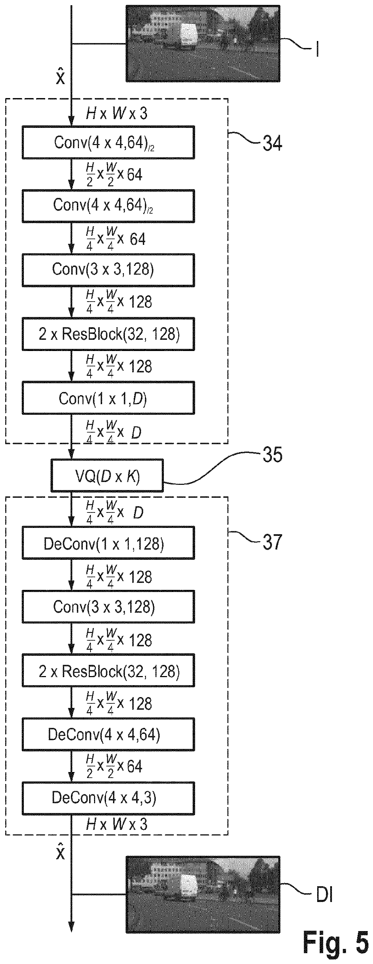

Figure 5 illustrates the architecture of the VQVAE employed as a denoising autoencoder. In the

$$x \frac{1}{2}$$

encoder two convolutional layers downsample the input image by followed by conv and ResNet blocks. The parameter D represents the channels in the bottleneck dimension which is the same as the size of each codebook vector in the VQ layer. The parameter K represents number of codebook vectors used. The input image x is corrupted depending on the training strategy used (RN/RC) (see Fig. 3). The exact same architecture is used for training DAPAS [31] (AE) with the only difference being that VQ layer is removed from the bottleneck. In Figure 5, reference sign 34 denotes an encoder and reference sign 37 denotes a decoder. Reference sign I denotes an Input Image and Reference sign DI an Output Image.

Section 5 EXPERIMENTAL RESULTS

Based on our experimental setup, we perform various experiments to investigate the benefits of using a VQ-VAE in comparison to a comparable denoising autoencoder (AE). We first perform an ablation study to find out the optimum size of the codebook used in the vector quantization layer (VQ). Next, using the best parameter settings, we perform detailed robustness evaluations of the target DNN using both the VQVAE and the AE as an input preprocessor.

Section 5.1 Codebook Ablation Experiments

Figure 6 shows a detailed overview of the VQ layer used in the bottleneck of VQVAE architecture (as shown in Fig. 5). Each pixel of the encoder output

$$f_e(x)$$

(a 1$D$ vector across channels of size D denoted by reference sign V1) is replaced by the closest codebook vector $e_k$ (another 1$D$ vector of the same size D as denoted by reference sign V2) using a nearest neighbor search algorithm and the output

$$\tilde{f}_e(x)$$

fed in to the decoder as input for reconstruction. Reference sign 36 denotes the CodeBook (CB). Reference sign 35 denotes the Vecotr Quantization (VQ) (D, K).

The bottleneck VQ layer of the VQVAE comprises of a total of K codebook vectors $e_k$, $k \in [1, ..., K]$, where k denotes an index. Each codebook vector $e_k$ is simply a one-dimensional vector of length D. Both D and K are important hyperparameters that influence the overall complexity as well as quality of the results. Following [22], we perform ablation experiments to investigate the effect of varying both these hyperparameters, i.e.

$D \in [32, 64, 128]$ and $K \in [256; 512; 1024]$, on the target ICNet segmentation model trained on the Cityscapes dataset. For each configuration, the VQVAE (RN) is trained from scratch using the exact same training parameters, i.e. using an adam optimizer, a batch size of 32, learning rate of 1$e$ - 4 with a cyclic scheduler, crop size of 256 $\times$ 256 and a total of 560 epochs. Once trained, the VQVAE is plugged in front of the ICNet as a pre-processor (as shown in Fig.

2) and mIoU is computed on both clean and noisy images over the entire validation set. We report the mIoU on clean images as well as an average mIoU on images perturbed by gaussian noise using five different severities (1-5) in the table in fig. 9. Additionally, the average inference time per image (in ms) is also reported.

The Table depicted in Fig. 9 shows the effect of varying VQVAE codebook parameters (D;K) on the target DNN (ICNet trained on Cityscapes dataset).

First, it is analyzed how good the VQVAE (RN) can denoise gaussian noise of varying severities (1-5). This is done by measuring the average structural similarity index metric (SSIM) [38] between clean images x and the reconstructed output of the VQVAE ($\hat{x}$) on the entire Cityscapes validation set. A higher SSIM is better with 1:0 being the best case and 0:0 being the worst.

From the results, it seems that (D,K) being (32; 512) and (64; 512) are extremely competitive, improving the baseline SSIM from 0:69 to almost 0:955, an absolute improvement of 26:2%. On the other hand, it seems to be difficult to predict a clear trend on which setting performs the best when it comes to pure denoising alone. Intuitively, one might expect that a higher K and correspondingly higher D is always better, however this does not seem to be the case.

Next, the applicant investigates how well the denoised images perform when fed into the target semantic segmentation model, i.e. the ICNet, since the output of the segmentation is the most important criteria. We therefore analyze the mIoU on both clean and perturbed images, and also report the average inference time per image for the VQVAE. From the results, it seems that both (32; 512) and (64; 512) perform exactly the same, achieving a mIoU of 0:711, 2% lower than the baseline. However, on corrupted images, (64; 512) outperforms (32; 512) by 0:3% absolute. On the whole, the VQVAE helps improve mIoU on corrupted images by approximately 8:5% absolute overall, a performance score competitive with clean images. At the same time, there is also a clear trade-off with the overall inference time that tends to increase as both D and K are increased. Since (64; 512) offers reasonably strong results on corrupted images, without significantly increasing the inference time, the applicant uses this setting for all our experiments next.

Section 5.2 Robustness Evaluation

Next, the applicant investigates robustness improvements of the baseline segmentation model using both AE and VQVAE as an input pre-processor. For each model, we investigate improvements on all corruptions and attacks (as shown earlier in the table in fig. 7) and report both averaged as well as individual improvements.

Section 5.2.1 Robustness against individual distributions

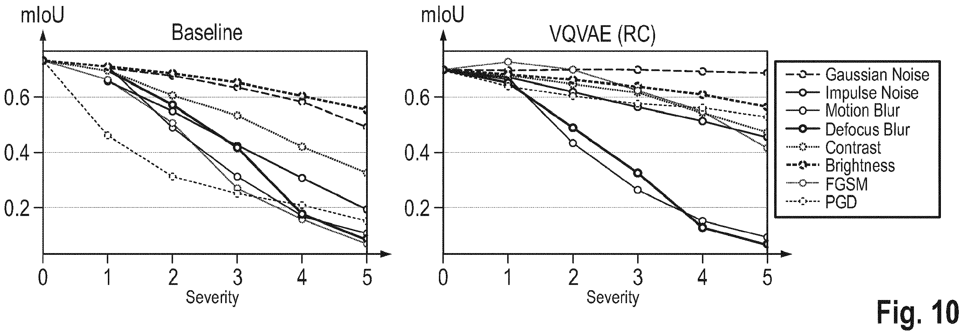

First, the applicant investigates robustness improvements of the ICNet model trained on Cityscapes dataset with and without using a VQVAE (RC) as an input pre-processor and show results in Fig. 10 From these plots, it seems that the baseline model is not robust to almost all of the investigated corruptions and attacks as the mIoU tends to decrease almost linearly with increasing severities. The baseline model seems to be most robust to brightness and gaussian noise and least robust to adversarial attacks. However, as soon as we plug in the VQVAE (RC) as an input pre-processor, there is a significant improvement in robustness on almost all types of distributions. Interestingly, even though the VQVAE is trained only on gaussian noise, contrast and motion blur, we observe several improvements on unseen corruptions, namely impulse noise, brightness, FGSM, and PGD attacks. At the same time, the VQVAE struggles with blurring as we do not see any improvements despite being trained for this task.

Figure 10 shows: Robustness evaluation of ICNet with and without using a VQVAE as an input pre-processor. Each point here corresponds to an average mIoU over the entire Cityscapes validation set. The severities 1-5 are chosen for each corruption such that SSIM w.r.t. clean images on average over the entire validation set drops by 10% (see also the table in Fig. 7).

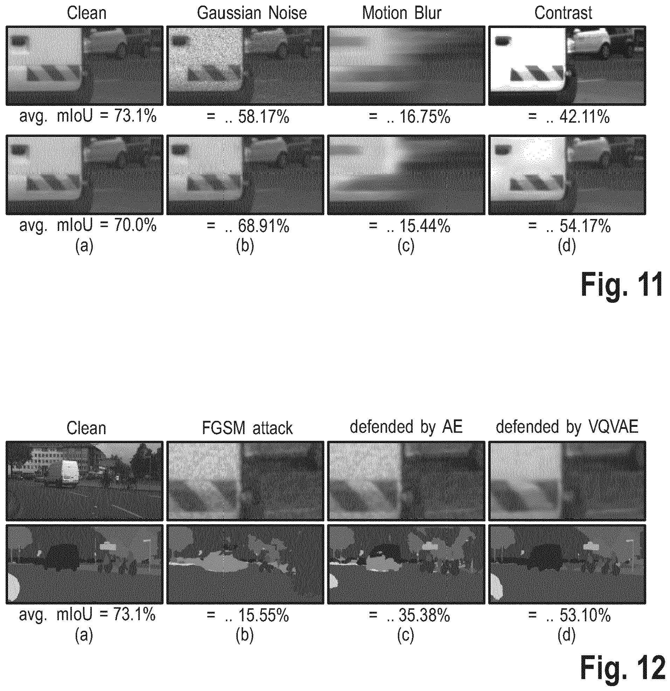

In Fig. 11, the applicant visualizes qualitatively a sample image and its corrupted counterparts before and after of denoising using the VQVAE. On corruptions, especially on gaussian noise and contrast, the VQVAE performs remarkably well as the output images look quite close to their clean counterparts. Additionally, the average mIoU also increases by roughly 10 - 12% on both these corruptions on the entire validation set. However, on motion blur, the effect of denoising on mIoU alone seems to be worse than the baseline, even though there seems to be a marginal qualitative improvement using the VQVAE. Unfortunately, due to the nature of motion blur, several fine-grained details in the image are lost, thereby making it a much harder task to recover when compared to other corruptions.

Figure 11: Qualitative visualization of the effect of VQVAE (RC) on a sample clean image (as shown in Fig. 12) and its corresponding corrupted images (with severity 4) on (b) Gaussian noise, (c) motion blur and (d) contrast. Top row shows input images fed into the VQVAE (RC) and bottom row shows the output of the VQVAE (RC). The images are zoomed in for better visualization. The mIoU values in the bottom line correspond to the average mIoU over the entire Cityscapes validation set for the target ICNet model.

Next, the applicant visualizes the effect of denoising using the VQVAE (RN) on adversarial attacks in Fig. 12. Unlike the VQVAE (RC), the VQVAE (RN) is only trained on gaussian noise alone and tested on different attacks. For comparison, we compare with an equivalent denoising autoencoder, i.e. AE (RN). The only difference between an AE (RN) and a VQVAE (RN) is the vector quantization (VQ) layer used in the bottleneck and everything else regarding the architecture and training setup is kept exactly the same. From the results, it is clear that the VQ layer helps as the VQVAE outperforms the AE by a large margin both qualitatively as well as on the output segmentation map. Inside the VQ layer, since the quantization is performed on an individual pixel level, noisy pixels get replaced by corresponding clean pixels in the latent space. Similar to image quilting [17], where image patches from the input are replaced by corresponding clean patches from a pre-stored database, vector quantization does the same on the even smaller latent space, thereby being faster and more efficient.

Section 5.2.2 Comparison between AE and VQVAE

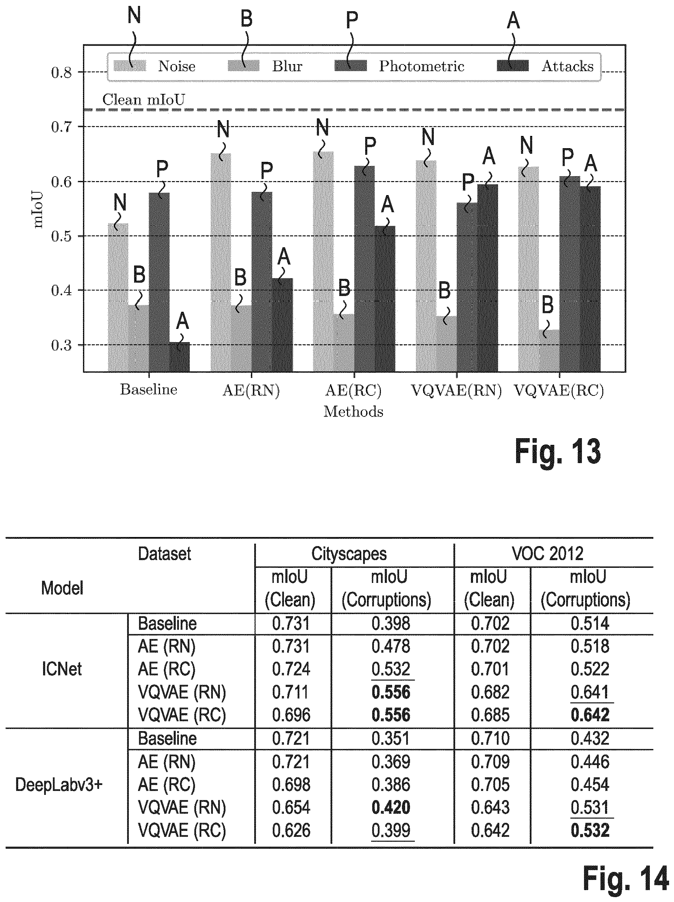

In Fig. 13, we compare AE and VQVAE with their corresponding training strategies (RN/RC) and show results on four kinds of distributions (noise N, blur B, photometric P and attacks A) using the ICNet as the target segmentation model. Averaged results are taken for each category as shown in the table in Fig. 7 over the entire Cityscapes validation set over 5 severity levels.

From the results, we observe that the RN training strategy helps improve robustness against noise and attacks only. On the other hand, the RC strategy helps improve robustness against noise, photometric changes and attacks at the same time. In comparison to AE, VQVAE is far superior at adversarial attacks while the AE performs slightly better on noise and photometric corruptions. However, compared to the baseline, both AE and VQVAE fail to improve robustness to different kinds of blur, which is already quite a strong corruption even at low severities when compared to the rest.

Figure 12 shows: Adversarial attack on the ICNet using the fast gradient sign method (FGSM); (a) an example clean image (top row) and its segmentation output (bottom row), (b) corresponding adversarial image and its output (c) adversarial image defended by AE (RN) and its output (d) adversarial image defended by VQVAE (RN) and its output. The images in (b), (c) and (d) are zoomed in for for better visualization. The mIoU values in the bottom line correspond to the average mIoU over the entire Cityscapes validation set.

Figure 13 shows: Comparison of pre-processor methods on different corruption types for the ICNet model trained on Cityscapes dataset. Averaged results over 5 severities per corruption across the entire Cityscapes validation set are reported grouped across different categories (as shown in the table of fig. 7).

Finally, the applicant aggregates these results further and compare it with different segmentation models and datasets in the table in figure 14. Averaged results are shown on all corruptions and attacks together for all severities on the entire validation set. On both models and datasets, the VQVAE outperforms the AE on corruptions and attacks. However, this comes at a higher drop on clean performance with the VQVAE than with the AE. On the ICNet, the clean performance drops by roughly 2 - 3% on both datasets using the VQVAE, however the robustness gains are far superior being 15:8% absolute on Cityscapes and 12:8% absolute on VOC 2012 dataset. In comparison, on the DeepLab v3+ model, the baseline performance on clean drops a lot severely, almost 7% on both datasets. However, the robustness gains are roughly 7% absolute and 10% absolute on Cityscapes and VOC 2012 datasets respectively. The large drop in clean performance can be attributed to the non-optimized codebook parameters used for the DeepLab v3 model (as shown earlier in the table in figure 9). Performing such a detailed parameter optimization for each model and dataset is quite expensive and hence left as out of scope. However, it is indeed interesting to note that even under non-optimized parameters, the VQVAE still outperforms the AE on average across all attacks and corruptions by a large margin. Additionally, one might expect even better results on clean if the target segmentation model is retrained using output images of the VQVAE.

Section 6 CONCLUSION

In these 6 Sections 1 - 6, the applicant described his investigations using VQVAEs as an input pre-processor to improve robustness of semantic segmentation models. We proposed two training strategies, i.e. using random noise (RN), and using random corruptions (RC) to compensate for a variety of real-world distributions as well as adversarial attacks. From the applicants results the applicant showed that the vector quantization layer is largely responsible for improving adversarial robustness when compared to comparable denoising autoencoders. This was possible by training a VQVAE on purely random gaussian noise which generalizes well against unseen adversarial attacks. Additionally, the applicant also showed, that VQVAE can also be used to denoise a variety of different corruption types, all at once. However, the generalization of the VQVAE is limited to the types of corruptions that are similar to the ones it was trained on. Compared to all corruptions, both AE and VQVAE struggled with improving on blurred images indicating the need for additional complex training schemes and methods.

References cited in Section 1 - 6:

[1] Chen, L.-C., Papandreou, G., Schroff, F. & Adam, H. "Rethinking Atrous Convolution for Semantic Image Segmentation". In: arXiv 1706.05587 (2017). arXiv: 1706.05587 (cit. on p. 1).

[2] Zhu, Y., Sapra, K., Reda, F. A., Shih, K. J., Newsam, S., Tao, A. & Catanzaro, B. "Improving Semantic Segmentation via Video Propagation and Label Relaxation". In: Proc. of CVPR. Long Beach, CA, USA, 2019, pp. 1-14 (cit. on p. 1).

[3] Wang, J., Sun, K., Cheng, T., Jiang, B., Deng, C., Zhao, Y., Liu, D., Mu, Y., Tan, M., Wang, X., Liu, W. & Xiao, B. "Deep High-Resolution Representation Learning for Visual Recognition". In: Proc. of CVPR. Long Beach, CA, USA, 2019, pp. 1-17 (cit. on p. 1).

[4] Löhdefink, J., Bar, A., Schmidt, N. M., Hüger, F., Schlicht, P. & Fingscheidt, T. "On Low-Bitrate Image Compression for Distributed Automotive Perception: Higher Peak SNR Does Not Mean Better Semantic Segmentation". In: Proc. of IV. Paris, France, 2019, pp. 352-359 (cit. on p. 1).

[5] Girshick, R. "Fast R-CNN". In: Proc. of ICCV. Las Condes, Chile, 2015, pp. 1-21 (cit. on p.1).

[6] Redmon, J., Divvala, S., Girshick, R. & Farhadi, A. "You Only Look Once: Unified, Real-Time Object Detection". In: Proc. of CVPR. Boston, MA, USA, 2015, pp. 779-788 (cit. on p. 1).

[7] He, K., Gkioxari, G., Dollar, P. & Girshick, R. "Mask R-CNN". In: Proc. of ICCV. Venice, Italy, 2017, pp. 2980-2988 (cit. on p. 1).

[8] Krizhevsky, A., Sutskever, I. & Hinton, G. E. "ImageNet Classification with Deep Convolutional Neural Networks". In: Proc. of NIPS. Lake Tahoe, USA, 2012, pp. 1097-1105 (cit. on p. 1).

[9] He, K., Zhang, X., Ren, S. & Sun, J. "Spatial Pyramid Pooling in Deep Convolutional Networks for Visual Recognition". In: IEEE Trans. on Pattern Analysis and Machine Intelligence (TPAMI) 37.9 (2015), pp. 1904-1916 (cit. on p. 1).

[10] Mahajan, D., Girshick, R., Ramanathan, V., He, K., Paluri, M., Li, Y., Bharambe, A. & Maaten, L. van der. "Exploring the Limits of Weakly Supervised Pretraining". In: Proc. Of ECCV. Munich, Germany, 2018, pp. 1-23 (cit. on p. 1).

[11] Szegedy, C., Zaremba, W., Sutskever, I., Bruna, J., Erhan, D., Goodfellow, I. & Fergus, R. "Intriguing Properties of Neural Networks". In: Proc. of ICLR. Montreal, QC, Canada, 2014 (cit. on p. 1).

[12] Hendrycks, D. & Dietterich, T. "Benchmarking Neural Network Robustness to Common Corruptions and Perturbations". In: Proc. of ICLR. New Orleans, LA, USA, 2019, pp. 1-15 (cit. on pp. 1, 7).

[13] Goodfellow, I. J., Shlens, J. & Szegedy, C. "Explaining and Harnessing Adversarial Examples". In: Proc. of ICLR. San Diego, CA, USA, 2015 (cit. on p. 1).

[14] Papernot, N., McDaniel, P., Wu, X., Jha, S. & Swami, A. "Distillation as a Defense to Adversarial Perturbations Against Deep Neural Networks". In: Proc. of IEEE Symposium on Security and Privacy (SP). San Jose, CA, USA, 2016, pp. 582-597 (cit. on p. 1).

[15] Xu, W., Evans, D. & Qi, Y. "Feature Squeezing: Detecting Adversarial Examples in Deep Neural Networks". In: Proc. of NDSS Symposium. San Diego, USA, 2018 (cit. on p. 1).

[16] Das, N., Shanbhogue, M., Chen, S.-T., Hohman, F., Li, S., Chen, L., Kounavis, M. E. & Chau, D. H. "Shield: Fast, Practical Defense and Vaccination for Deep Learning using JPEG Compression". In: Proc. of KDD. London, UK, 2018 (cit. on p. 1).

[17] Guo, C., Rana, M., Cisse, M. & Maaten, L. van der. "Countering Adversarial Images Using Input Transformations". In: Proc. of ICLR. Vancouver, Canada, 2018 (cit. on pp. 1, 12).

[18] Xie, C., Wang, J., Zhang, Z., Zhou, Y., Xie, L. & Yuille, A. "Adversarial Examples for Semantic Segmentation and Object Detection". In: Proc. of ICCV. Venice, Italy, 2017, pp. 1369-1378 (cit. on p. 1).

[19] Samangouei, P., Kabkab, M. & Chellappa, R. "Defense-GAN: Protecting Classifiers Against Adversarial Attacks Using Generative Models". In: Proc. of ICLR. Vancouver, BC, Canada, 2018, pp. 1-17 (cit. on pp. 1-3).

[20] Li, X. & Ji, S. "Defense-VAE: A Fast and Accurate Defense against Adversarial Attacks". In: Proc. of ECML - Workshop. Würzburg, Germany, 2019, pp. 1-16 (cit. on pp. 1-3).

[21] Lucas, J., Tucker, G., Grosse, R. & Norouzi, M. "Understanding Posterior Collapse in Generative Latent Variable Models". In: Proc. of ICLR - Workshop. New Orleans, LA, USA, 2019, pp. 1-16 (cit. on pp. 2, 4).

[22] Oord, A. van den, Vinyals, O. & Kavukcuoglu, K. "Neural Discrete Representation Learning". In: Proc. of NIPS. Long Beach, CA, USA, 2017, pp. 6309-6318 (cit. on pp. 2, 4, 10).

[23] Meng, D. & Chen, H. "MagNet: a Two-Pronged Defense against Adversarial Examples". In: Proc. of ACM CCS. Dallas, TX, USA, 2017, pp. 135-147 (cit. on pp. 3, 6).

[24] Liao, F., Liang, M., Dong, Y., Pang, T., Hu, X. & Zhu, J. "Defense Against Adversarial Attacks Using High-Level Representation Guided Denoiser". In: Proc. of CVPR. Salt Lake City, UT, USA, 2018, pp. 1778-1787 (cit. on pp. 3, 6).

[25] Bakhti, Y., Fezza, S. A., Hamidouche, W. & Déforges, O. "DDSA: A Defense Against Adversarial Attacks Using Deep Denoising Sparse Autoencoder". In: IEEE Access 7 (2019), pp. 160397-160407 (cit. on pp. 3, 6).

[26] Srinivasan, V., Marban, A., Müller, K.-R., Samek, W. & Nakajima, S. "Counterstrike: Defending Deep Learning Architectures Against Adversarial Samples by Langevin Dynamics with Supervised Denoising Autoencoder". In: arXiv 1805.12017 (2018). arXiv: 1805.12017 (cit. on p. 3).

[27] Sahay, R., Mahfuz, R. & Gamal, A. E. "Combatting Adversarial Attacks through Denoising and Dimensionality Reduction: A Cascaded Autoencoder Approach". In: Proc. of CISS. Baltimore, MD, USA, 2019, pp. 1-6 (cit. on p. 3).

[28] Vaishnavi, P., Eykholt, K., Prakash, A. & Rahmati, A. "Towards Model-Agnostic Adversarial Defenses using Adversarially Trained Autoencoders". In: arXiv 1909.05921 (2019). arXiv: 1909.05921 (cit. on p. 3).

[29] Song, Y., Kim, T., Nowozin, S., Ermon, S. & Kushman, N. "PixelDefend: Leveraging Generative Models to Understand and Defend against Adversarial Examples". In: Proc. of ICLR. Vancouver, Canada, 2018, pp. 1-12 (cit. on p. 3).

[30] Athalye, A., Carlini, N. & Wagner, D. "Obfuscated Gradients Give a False Sense of Security: Circumventing Defenses to Adversarial Examples". In: Proc. of ICML. Stockholm, Sweden, 2018, pp. 274-283 (cit. on p. 3).

[31] Cho, S., Jun, T. J., Oh, B. & Kim, D. "DAPAS: Denoising Autoencoder to Prevent Adversarial attack in Semantic Segmentation". In: Proc. of IJCNN. Glasgow, UK, 2020, pp. 1-8 (cit. on pp. 3, 6, 8, 9).

[32] Agustsson, E., Mentzer, F., Tschannen, M., Cavigelli, L., Timofte, R., Benini, L. & Gool, L. V. "Soft-to-Hard Vector Quantization for End-to-End Learning Compressible Representations". In: Proc. of NIPS. Long Beach, CA, USA, 2017, pp. 1141-1151 (cit. on p. 4).

[33] Cordts, M., Omran, M., Ramos, S., Rehfeld, T., Enzweiler, M., Benenson, R., Franke, U., Roth, S. & Schiele, B. "The Cityscapes Dataset for Semantic Urban Scene Understanding". In: Proc. of CVPR. Las Vegas, NV, USA, 2016, pp. 3213-3223 (cit. on p. 8).

[34] Everingham, M., Van Gool, L., Williams, C. K. I., Winn, J. & Zisserman, A. The PASCAL Visual Object Classes Challenge 2012 (VOC2012) Results. 2012 (cit. on p. 8).

[35] Hariharan, B., Lubomir Bourdev, P. A. and; Maji, S. & Malik, J. "Semantic Contours from Inverse Detectors". In: Proc. of ICCV. Vancouver, Canada, 2011, pp. 991-998 (cit. on p. 8).

[36] Chen, L.-C., Papandreou, G., Kokkinos, I., Murphy, K. & Yuille, A. L. "DeepLab: Semantic Image Segmentation With Deep Convolutional Nets, Atrous Convolution, and Fully Connected CRFs". In: IEEE Transactions on Pattern Analysis and Machine Intelligence 40.4 (2018), pp. 834-848 (cit. on p. 8).

[37] Zhao, H., Qi, X., Shen, X., Shi, J. & Jia, J. "ICNet for Real-Time Semantic Segmentation on High-Resolution Images". In: Proc. of ECCV. Munich, Germany, 2018, pp. 405-420 (cit. on p. 8).

[38] Wang, Z., Bovik, A., Sheikh, H. & Simoncelli, E. "Image Quality Assessment: From Error Visibility to Structural Similarity". In: IEEE Transactions on Image Processing 13.4 (2004), pp. 600-612 (cit. on p. 10).

The applicant reserves his right to claim all features disclosed in the application document as being an essential feature of the invention, as long as they are new, individually or in combination, in view of the prior art. Furthermore, it is noted that in the figures features are described, which can be advantageous individually. Someone skilled in the art will directly recognize that a specific feature being disclosed in a figure can be advantageous also without the adoption of further features from this figure. Furthermore, someone skilled in the art will recognize that advantages can evolve from a combination of diverse features being disclosed in one or various figures.

List of reference symbols

| | |
|---|---|
| 1 | Vehicle |
| 10 | Processing unit |
| 14 | Control unit |
| 20 | Perception system |
| 30 | Defense unit |
| 32 | Input Transformation function |
| 34 | Encoder |
| 36 | Codebooks |
| 37 | Decoder |
| 38 | VQ-VAE (Vector Quantized Variational Auto Encoder) |
| 40 | Target perception unit, segmentation network |
| 50 | Codebook vector |
| 52 | Example input vector |
| 53 | Voronoi cell boundaries |
| 54 | Decision boundary |
| I | Input Image |
| DI | Defense output image |
| GT | Ground Truth |

SO          Segmentation output
RI          Robust Image
V1, V2      1*D* vector of the size D
N           Noise
B           Blur
P           Photometric
A           Attacks

**Claims**

1. Method for automatically executing a vehicle function of a, in particular at least partially autonomously controlled, vehicle (1) based on spatially resolved raw sensor data (I) for environment perception generated by at least one sensor device (22, 24, 26) for environment detection of the vehicle (1), including:

   - receiving spatially resolved raw sensor data generated by the at least one sensor device (22, 24, 26) of the vehicle (1);
   - processing sensor data which are characteristic for the spatially resolved raw sensor data (I) by a defense unit (30) for adversarial defense against and/or for detection of adversarial attacks on spatially resolved raw sensor data, the defense unit (30) determining defense output sensor data, wherein for the determination of the defense output sensor data, the sensor data are mapped from a high dimensional input space representation into a low dimensional latent space representation of the sensor data and a vector quantization operation is applied to the latent space representation of the sensor data;
   - executing the vehicle function based on the defense output sensor data.

2. Method according to claim 1, wherein for the determination of the defense output sensor data, a Vector Quantized Variational AutoEncoder (VQ-VAE) is used.

3. Method according to one the preceding claims, wherein a set of codebook vectors is provided, wherein for the vector quantization operation, the latent space representation of the input sensor data is mapped to a number of codes in an embedding space by determining the codebook vectors from the set of codebook vectors with minimum distance to the latent space representation of the input sensor data.

4. Method according to one of the preceding claims, wherein the set of codebook vectors is learned as a result from a, in particular computer-implemented, training process, in which the difference of defense output sensor data determined by the defense unit (30) based on adversarial sensor data compared to corresponding clean sensor data is minimized.

5. Method according to one of the preceding claims, wherein the sensor data processing by the defense unit (30), in particular based on Vector Quantized Variational Autoencoder (VQ-VAE), is applied to the sensor data as pre-processing step prior to being fed into a target perception unit (40) for the vehicle (1) which is configured to perform a perception task.

6. Method according to the preceding claim, wherein the target perception unit (40) being supplied with the target input sensor data as input is configured to process the target input sensor data by means of an artificial neural network.

7. Method according to the preceding claims, wherein the sensor data are processed by the defense unit (30) in real-time.

8. Defense unit (30) for a vehicle (1) for adversarial defense against and/or for detection of adversarial attacks on spatially resolved raw sensor data (I) for environment perception generated by at least one sensor device (22, 24, 26) for environment detection of the vehicle (1), wherein the defense unit (30) is configured to receive sensor data which are characteristic for the spatially resolved raw sensor data (I), **characterized in that** the defense unit (30) is configured to process the sensor data, hereby determining defense output sensor data, **characterized in, that** for the determination of the defense output sensor data, the sensor data are mapped from a high dimensional input space representation into a low dimensional latent space representation of the sensor data and a vector quantization operation is applied to the latent space representation of the sensor data.

9. Defense unit (30) according to the preceding claim, being configured to use a Vector Quantized Variational AutoEncoder (VQ-VAE).

10. Vehicle (1), in particular motor vehicle and/or designed for autonomous or partially autonomous controlled driving, comprising a defense unit (30) according to one of the two preceding claims.

11. A Computer-implemented method for training a machine learning defense model for adversarial defense against and/or detection of adversarial attacks on spatially resolved raw sensor data for environment perception generated by at least one sensor device (22, 24, 26) for environment detection of a vehicle (1), including

- providing a training dataset comprising a plurality of clean spatially resolved training sensor data and a plurality of adversarial spatially resolved training sensor data, wherein in particular each adversarial training sensor data can be associated with clean spatially resolved training sensor data;
- training, based on the training dataset, a machine learning defense model for removing and/or reducing a potential adversarial perturbation from spatially resolved input sensor data being supplied to the machine learning defense model as input variables, wherein the machine learning defense model includes a set of trainable parameters and is configured to determine output sensor data based on the spatially resolved input sensor data, wherein for the determination of the defense output sensor data, the input sensor data are mapped from a high dimensional input space representation into a low dimensional latent space representation of the input sensor data and a vector quantization operation is applied to the latent space representation of the input sensor data.

12. Method according to the preceding claim, wherein the machine learning defense model is based on a Vector Quantized Variational AutoEncoder (VQ-VAE).

13. Method according to one of the two preceding claims, wherein the machine learning defense model includes a set of trainable codebook vectors and wherein for the vector quantization operation, the latent space representation of the input sensor data is mapped to a number of codes in an embedding space by determining the codebook vectors from the set of codebook vectors with minimum distance to the latent space representation of the input sensor data.

14. Method according to one of the preceding claims 11 - 13, wherein for training the trainable codebook vectors, a loss function is determined and/or calculated by comparison of, in particular the difference of, output sensor data determined by the machine learning defense model from adversarial training sensor data and clean training sensor data associated to the adversarial training sensor data.

15. Method according to one of the preceding claims 11 - 14, wherein the adversarial spatially resolved training sensor data are generated by adding an adversarial perturbation to a clean spatially resolved training sensor data.

**Fig. 1**

**Fig. 2**

Fig. 3

EP 4 120 136 A1

Fig. 4

**Fig. 5**

## Fig. 6

Vector Quantization (VQ) (D, K)

| Category | Type | Noise Function | Parameters |
|---|---|---|---|
| Noise | Gaussian Noise | $n_{GN}(\cdot)$ | $\mu = 0$, $\sigma \in [0.045, 0.165]$ |
| | Impulse Noise | $n_{IN}(\cdot)$ | probability $\in [0.003, 0.024]$ |
| Blur | Motion Blur | $n_{MB}(\cdot)$ | kernel size $\in [0, 25]$ |
| | Defocus Blur | $n_{DB}(\cdot)$ | blur strength $\in [0.4, 5.0]$, blur radii $\in [4, 40]$ |
| Photometric | Contrast | $n_{C}(\cdot)$ | factor $\in [1.0, 2.0]$ |
| | Brightness | $n_{B}(\cdot)$ | factor $\in [1.45, 3.0]$ |
| Adversarial Attack | FGSM | $n_{FGSM}(\cdot)$ | $\epsilon \in [0.01, 0.05]$, iterations = 20 |
| | PGD | $n_{PGD}(\cdot)$ | $\epsilon \in [0.01, 0.05]$, iterations = 20 |

## Fig. 7

| | DeepLabv3+ | | ICNet | |
|---|---|---|---|---|
| | Cityscapes | VOC 2012 | Cityscapes | VOC 2012 |
| mIoU | 0.72 | 0.70 | 0.73 | 0.70 |
| Crop Size | 768 x 768 | 513 x 513 | 960 x 960 | 513 x 513 |

## Fig. 8

| | CB vector length$D$ | No. of CB vectors$K$ | Avg. SSIM (GN) | mIoU (Clean) | mIoU (GN) | Inference time (in ms) |
|---|---|---|---|---|---|---|
| Baseline | | | 0.693 | 0.731 | 0.619 | |
| VQVAE | 32 | 256 | 0.952 | 0.702 | 0.697 | **0.040** |
| | | 512 | **0.955** | **0.711** | 0.701 | 0.045 |
| | | 1024 | 0.952 | 0.706 | 0.699 | 0.055 |
| | 64 | 256 | 0.923 | 0.631 | 0.624 | 0.043 |
| | | 512 | 0.953 | **0.711** | **0.704** | 0.048 |
| | | 1024 | 0.949 | 0.703 | 0.693 | 0.057 |
| | 128 | 256 | 0.941 | 0.688 | 0.685 | 0.242 |
| | | 512 | 0.908 | 0.585 | 0.576 | 0.245 |
| | | 1024 | 0.944 | 0.688 | 0.686 | 0.254 |

## Fig. 9

Fig. 10

VQVAE (RC)

mIoU

0.6  0.4  0.2

0  1  2  3  4  5
Severity

Baseline

mIoU

0.6  0.4  0.2

0  1  2  3  4  5
Severity

— Gaussian Noise
— Impulse Noise
— Motion Blur
— Defocus Blur
— Contrast
— Brightness
— FGSM
— PGD

| Clean | Gaussian Noise | Motion Blur | Contrast |
|---|---|---|---|
| avg. mIoU = 73.1% | = .. 58.17% | = .. 16.75% | = .. 42.11% |

| avg. mIoU = 70.0% | = .. 68.91% | = .. 15.44% | = .. 54.17% |
|---|---|---|---|
| (a) | (b) | (c) | (d) |

**Fig. 11**

| Clean | FGSM attack | defended by AE | defended by VQVAE |
|---|---|---|---|
| avg. mIoU = 73.1% | = .. 15.55% | = .. 35.38% | = .. 53.10% |
| (a) | (b) | (c) | (d) |

**Fig. 12**

Fig. 13

| | Dataset | Cityscapes | | VOC 2012 | |
|---|---|---|---|---|---|
| Model | | mIoU (Clean) | mIoU (Corruptions) | mIoU (Clean) | mIoU (Corruptions) |
| ICNet | Baseline | 0.731 | 0.398 | 0.702 | 0.514 |
| | AE (RN) | 0.731 | 0.478 | 0.702 | 0.518 |
| | AE (RC) | 0.724 | 0.532 | 0.701 | 0.522 |
| | VQVAE (RN) | 0.711 | **0.556** | 0.682 | 0.641 |
| | VQVAE (RC) | 0.696 | **0.556** | 0.685 | **0.642** |
| DeepLabv3+ | Baseline | 0.721 | 0.351 | 0.710 | 0.432 |
| | AE (RN) | 0.721 | 0.369 | 0.709 | 0.446 |
| | AE (RC) | 0.698 | 0.386 | 0.705 | 0.454 |
| | VQVAE (RN) | 0.654 | **0.420** | 0.643 | 0.531 |
| | VQVAE (RC) | 0.626 | 0.399 | 0.642 | **0.532** |

Fig. 14

Europäisches
Patentamt

European
Patent Office

Office européen
des brevets

# EUROPEAN SEARCH REPORT

Application Number

EP 21 18 5693

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | LOHDEFINK JONAS ET AL: "On Low-Bitrate Image Compression for Distributed Automotive Perception: Higher Peak SNR Does Not Mean Better Semantic Segmentation", 2019 IEEE INTELLIGENT VEHICLES SYMPOSIUM (IV), IEEE, 9 June 2019 (2019-06-09), pages 424-431, XP033605947, DOI: 10.1109/IVS.2019.8813813 [retrieved on 2019-08-26] * sections I, III, IV; figures 1, 3 * | 1-15 | INV. G06N3/04 G06N3/08 |
| A | IORDANIS FOSTIROPOULOS: "Depthwise Discrete Representation Learning", ARXIV.ORG, CORNELL UNIVERSITY LIBRARY, 201 OLIN LIBRARY CORNELL UNIVERSITY ITHACA, NY 14853, 11 April 2020 (2020-04-11), XP081642805, * sections 2.1, 2.2 * | 1-15 | |
| A | HWANG UIWON ET AL: "PuVAE: A Variational Autoencoder to Purify Adversarial Examples", IEEE ACCESS, IEEE, USA, vol. 7, 4 September 2019 (2019-09-04), pages 126582-126593, XP011745878, DOI: 10.1109/ACCESS.2019.2939352 [retrieved on 2019-09-13] * section IV; figure 2 * | 1-15 | TECHNICAL FIELDS SEARCHED (IPC)<br><br>G06N |
| A | US 2021/117705 A1 (LIU YAN [CN] ET AL) 22 April 2021 (2021-04-22) * paragraphs [0033] - [0036], [0039] - [0041], [0044] - [0048] * | 1-15 | |

The present search report has been drawn up for all claims

| Place of search | Date of completion of the search | Examiner |
|---|---|---|
| Munich | 7 December 2021 | Montoneri, Fabio |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 18 5693

This annex lists the patent family members relating to the patent documents cited in the above-mentioned European search report.
The members are as contained in the European Patent Office EDP file on
The European Patent Office is in no way liable for these particulars which are merely given for the purpose of information.

07-12-2021

| Patent document cited in search report | Publication date | Patent family member(s) | Publication date |
|---|---|---|---|
| US 2021117705 A1 | 22-04-2021 | CN 109886210 A<br>EP 3786835 A1<br>KR 20210031427 A<br>US 2021117705 A1<br>WO 2020173056 A1 | 14-06-2019<br>03-03-2021<br>19-03-2021<br>22-04-2021<br>03-09-2020 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190287217 A1
- US 20200184316 A1

- WO 2020195826 A1


**Non-patent literature cited in the description**

- **PAPERNOT.** *Practical Black-Box Attacks against Machine Learning,* 2017, https://arxiv.org/abs/1602.02697
- **MADRY et al.** *Towards Deep Learning Models Resistant to Adversarial Attacks,* 2019, https://arxiv.org/pdf/1706.06083.pdf
- **CHO et al.** *DAPAS: Denoising Autoencoder to Prevent Adversarial attack in Semantic Segmentation,* 1908, 05195, https://arxiv.org/abs/1908.05195
- **M. CORDTS ; M. OMRAN ; S. RAMOS ; T. REHFELD ; M. ENZWEILER ; R. BENENSON ; U. FRANKE ; S. ROTH ; B. SCHIELE.** The Cityscapes Dataset for Semantic Urban Scene Understanding. *Proc. of the IEEE Conference on Computer Vision and Pattern Recognition (CVPR),* 2016, https://www.cityscapes-dataset.com (cityscapes-dataset.com); https://www.cityscapes-dataset.com/wordpress/wp-content/papercite-data/pdf/cordts2016cityscapes.pdf
- **CHO et al.** *DAPAS: Denoising Autoencoder to Prevent Adversarial attack in Semantic Segmentation,* https://arxiv.org/abs/1908.05195
- **CHEN, L.-C. ; PAPANDREOU, G. ; SCHROFF, F. ; ADAM, H.** *Rethinking Atrous Convolution for Semantic Image Segmentation,* 2017, 1
- **ZHU, Y. ; SAPRA, K. ; REDA, F. A. ; SHIH, K. J. ; NEWSAM, S. ; TAO, A. ; CATANZARO, B.** Improving Semantic Segmentation via Video Propagation and Label Relaxation. *Proc. of CVPR,* 2019, 1-14
- **WANG, J. ; SUN, K. ; CHENG, T. ; JIANG, B. ; DENG, C. ; ZHAO, Y. ; LIU, D. ; MU, Y. ; TAN, M. ; WANG, X.** Deep High-Resolution Representation Learning for Visual Recognition. *Proc. of CVPR,* 2019, 1-17
- **LÖHDEFINK, J. ; BAR, A. ; SCHMIDT, N. M. ; HÜGER, F. ; SCHLICHT, P. ; FINGSCHEIDT, T.** On Low-Bitrate Image Compression for Distributed Automotive Perception: Higher Peak SNR Does Not Mean Better Semantic Segmentation. *Proc. of IV. Paris,* 2019, 352-359

- **GIRSHICK, R.** Fast R-CNN. *Proc. of ICCV,* 2015, 1-21
- **REDMON, J. ; DIVVALA, S. ; GIRSHICK, R. ; FARHADI, A.** You Only Look Once: Unified, Real-Time Object Detection. *Proc. of CVPR,* 2015, 779-788
- **HE, K. ; GKIOXARI, G. ; DOLLAR, P. ; GIRSHICK, R.** Mask R-CNN. *Proc. of ICCV,* 2017, 2980-2988
- **KRIZHEVSKY, A. ; SUTSKEVER, I. ; HINTON, G. E.** ImageNet Classification with Deep Convolutional Neural Networks. *Proc. of NIPS,* 2012, 1097-1105
- **HE, K. ; ZHANG, X. ; REN, S. ; SUN, J.** Spatial Pyramid Pooling in Deep Convolutional Networks for Visual Recognition. *IEEE Trans. on Pattern Analysis and Machine Intelligence (TPAMI),* 2015, vol. 37.9, 1904-1916
- **MAHAJAN, D. ; GIRSHICK, R. ; RAMANATHAN, V. ; HE, K. ; PALURI, M. ; LI, Y. ; BHARAMBE, A. ; MAATEN, L.** Exploring the Limits of Weakly Supervised Pretraining. *Proc. Of ECCV,* 2018, 1-23
- **SZEGEDY, C. ; ZAREMBA, W. ; SUTSKEVER, I. ; BRUNA, J. ; ERHAN, D. ; GOODFELLOW, I. ; FERGUS, R.** Intriguing Properties of Neural Networks. *Proc. of ICLR,* 2014, 1
- **HENDRYCKS, D. ; DIETTERICH, T.** Benchmarking Neural Network Robustness to Common Corruptions and Perturbations. *Proc. of ICLR.,* 2019, 1-15
- **GOODFELLOW, I. J. ; SHLENS, J. ; SZEGEDY, C.** Explaining and Harnessing Adversarial Examples. *Proc. of ICLR,* 2015, 1
- **PAPERNOT, N. ; MCDANIEL, P. ; WU, X. ; JHA, S. ; SWAMI, A.** Distillation as a Defense to Adversarial Perturbations Against Deep Neural Networks. *Proc. of IEEE Symposium on Security and Privacy (SP),* 2016, 582-597
- **XU, W. ; EVANS, D. ; QI, Y.** Feature Squeezing: Detecting Adversarial Examples in Deep Neural Networks. *Proc. of NDSS Symposium,* 2018, 1

- **DAS, N. ; SHANBHOGUE, M. ; CHEN, S.-T. ; HOHMAN, F. ; LI, S. ; CHEN, L. ; KOUNAVIS, M. E. ; CHAU, D. H.** Shield: Fast, Practical Defense and Vaccination for Deep Learning using JPEG Compression. *Proc. of KDD,* 2018, 1
- **GUO, C. ; RANA, M. ; CISSE, M. ; MAATEN, L. VAN DER.** Countering Adversarial Images Using Input Transformations. *Proc. of ICLR,* 2018, 1, , 12
- **XIE, C. ; WANG, J. ; ZHANG, Z. ; ZHOU, Y. ; XIE, L. ; YUILLE, A.** Adversarial Examples for Semantic Segmentation and Object Detection. *Proc. of ICCV,* 2017, 1369-1378
- **SAMANGOUEI, P. ; KABKAB, M. ; CHELLAPPA, R.** Defense-GAN: Protecting Classifiers Against Adversarial Attacks Using Generative Models. *Proc. of ICLR,* 2018, 1-17
- **LI, X. ; JI, S.** Defense-VAE: A Fast and Accurate Defense against Adversarial Attacks. *Proc. of ECML - Workshop,* 2019, 1-16
- **LUCAS, J. ; TUCKER, G. ; GROSSE, R. ; NOROUZI, M.** Understanding Posterior Collapse in Generative Latent Variable Models. *Proc. of ICLR - Workshop,* 2019, 1-16
- **OORD, A. VAN DEN ; VINYALS, O. ; KAVUKCUOGLU, K.** Neural Discrete Representation Learning. *Proc. of NIPS,* 2017, 6309-6318
- **MENG, D. ; CHEN, H.** MagNet: a Two-Pronged Defense against Adversarial Examples. *Proc. of ACM CCS,* 2017, 135-147
- **LIAO, F. ; LIANG, M. ; DONG, Y. ; PANG, T. ; HU, X. ; ZHU, J.** Defense Against Adversarial Attacks Using High-Level Representation Guided Denoiser. *Proc. of CVPR,* 2018, 1778-1787
- **BAKHTI, Y. ; FEZZA, S. A. ; HAMIDOUCHE, W. ; DÉFORGES, O.** DDSA: A Defense Against Adversarial Attacks Using Deep Denoising Sparse Autoencoder. *IEEE Access,* 2019, vol. 7, 160397-160407
- **SRINIVASAN, V. ; MARBAN, A. ; MÜLLER, K.-R. ; SAMEK, W. ; NAKAJIMA, S.** *Counterstrike: Defending Deep Learning Architectures Against Adversarial Samples by Langevin Dynamics with Supervised Denoising Autoencoder,* 2018, 3
- **SAHAY, R. ; MAHFUZ, R. ; GAMAL, A. E.** Combatting Adversarial Attacks through Denoising and Dimensionality Reduction: A Cascaded Autoencoder Approach. *Proc. of CISS. Baltimore,* 2019, 1-6
- **VAISHNAVI, P. ; EYKHOLT, K. ; PRAKASH, A. ; RAHMATI, A.** *Towards Model-Agnostic Adversarial Defenses using Adversarially Trained Autoencoders,* 2019, 3
- **SONG, Y. ; KIM, T. ; NOWOZIN, S. ; ERMON, S. ; KUSHMAN, N.** PixelDefend: Leveraging Generative Models to Understand and Defend against Adversarial Examples. *Proc. of ICLR,* 2018, 1-12
- **ATHALYE, A. ; CARLINI, N. ; WAGNER, D.** Obfuscated Gradients Give a False Sense of Security: Circumventing Defenses to Adversarial Examples. *Proc. of ICML,* 2018, 274-283
- **CHO, S. ; JUN, T. J. ; OH, B. ; KIM, D.** DAPAS: Denoising Autoencoder to Prevent Adversarial attack in Semantic Segmentation. *Proc. of IJCNN,* 2020, 1-8
- **AGUSTSSON, E. ; MENTZER, F. ; TSCHANNEN, M. ; CAVIGELLI, L. ; TIMOFTE, R. ; BENINI, L. ; GOOL, L. V.** Soft-to-Hard Vector Quantization for End-to-End Learning Compressible Representations. *Proc. of NIPS,* 2017, 1141-1151
- **CORDTS, M. ; OMRAN, M. ; RAMOS, S. ; REHFELD, T. ; ENZWEILER, M. ; BENENSON, R. ; FRANKE, U. ; ROTH, S. ; SCHIELE, B.** The Cityscapes Dataset for Semantic Urban Scene Understanding. *Proc. of CVPR,* 2016, 3213-3223
- **EVERINGHAM, M. ; VAN GOOL, L. ; WILLIAMS, C. K. I. ; WINN, J. ; ZISSERMAN, A.** *The PASCAL Visual Object Classes Challenge 2012 (VOC2012) Results,* 2012, 8
- **HARIHARAN, B. ; LUBOMIR BOURDEV, P. A. ; MAJI, S. ; MALIK, J.** Semantic Contours from Inverse Detectors. *Proc. of ICCV,* 2011, 991-998
- **CHEN, L.-C. ; PAPANDREOU, G. ; KOKKINOS, I. ; MURPHY, K. ; YUILLE, A. L.** DeepLab: Semantic Image Segmentation With Deep Convolutional Nets, Atrous Convolution, and Fully Connected CRFs. *IEEE Transactions on Pattern Analysis and Machine Intelligence 40.4,* 2018, 834-848
- **ZHAO, H. ; QI, X. ; SHEN, X. ; SHI, J. ; JIA, J.** ICNet for Real-Time Semantic Segmentation on High-Resolution Images. *Proc. of ECCV,* 2018, 405-420
- **WANG, Z. ; BOVIK, A. ; SHEIKH, H. ; SIMONCELLI, E.** Image Quality Assessment: From Error Visibility to Structural Similarity. *IEEE Transactions on Image Processing,* 2004, vol. 13.4, 600-612